# FASCICULE DE BREVET EUROPEEN

(11) **EP 2 162 719 B1**
(45) Date de publication et mention de la délivrance du brevet: **09.09.2015**
(21) Numéro de dépôt: 08826377.7
(22) Date de dépôt: 18.06.2008
(51) Int. Cl.: G01N 1/28, B01L 3/14

(54) **SYSTEME ET METHODE D'EXTRACTION EN CONTINU D'UNE PHASE LIQUIDE DE MICROECHANTILLONS, ET INSTALLATION AUTOMATISEE POUR LES PRELEVER, REALISER L'EXTRACTION ET DES MESURES LES CONCERNANT**
SYSTEM UND VERFAHREN ZUR KONTINUIERLICHEN EXTRAKTION EINER FLÜSSIGPHASE AUS MIKROPROBEN SOWIE AUTOMATISIERTE ANLAGE ZU DEREN ENTNAHME, ZUR AUSFÜHRUNG DER EXTRAKTION SOWIE ZUR DURCHFÜHRUNG VON MESSUNGEN IN ZUSAMMENHANG DAMIT
SYSTEM AND METHOD FOR THE CONTINUOUS EXTRACTION OF A LIQUID PHASE OF MICROSAMPLES, AND AUTOMATED INSTALLATION FOR THE WITHDRAWAL THEREOF, FOR CARRYING OUT THE EXTRACTION AND TAKING MEASUREMENTS THAT RELATE THERETO

(30) Priorité: 19.06.2007 FR 0704347
(43) Date de publication de la demande: 17.03.2010
(73) Titulaire: Commissariat à l'Énergie Atomique et aux Énergies Alternatives, 75015 Paris (FR)
(72) Inventeur: REYMOND, Jean-Marc, F-78470 Saint-Remy-les-Chevreuse (FR); KERHOAS-CAVATA, Sophie, F-78125 Raizeux (FR); MANGEOT, Philippe, F-94270 Le Kremlin-Bicetre (FR)
(74) Mandataire: Bolinches, Michel Jean-Marie
(86) Numéro de dépôt international: PCT/FR2008/000847
(87) Numéro de publication internationale: WO 2009/010662

(56) Documents cités:
- EP-A- 0 688 993
- EP-A- 1 450 159
- WO-A-00/21678
- WO-A1-02/062484
- FR-A- 2 395 037
- US-A- 3 852 194
- US-A- 3 921 898
- US-A- 5 399 144
- US-A- 5 906 744
- US-A1- 2003 199 789
- US-A1- 2005 026 765
- US-A1- 2007 083 160
- US-B1- 6 254 834
- LAPOINTE D ET AL: "A Microvolumetric Blood Counter/Sampler for Metabolic PET Studies in Small Animals" août 1998 (1998-08), IEEE TRANSACTIONS ON NUCLEAR SCIENCE, IEEE SERVICE CENTER, NEW YORK, NY, US, PAGE(S) 2195-2199 , XP011088175 ISSN: 0018-9499 cité dans la demande

## Description

La présente invention concerne un système et une méthode automatisés d'extraction physique en continu d'au moins une phase liquide d'une série de microéchantillons liquides préalablement prélevés et stockés en étant discrétisés dans l'espace et dans le temps, ainsi qu'une installation automatisée pour procéder successivement et en continu au prélèvement, au stockage, à l'extraction d'au moins une phase et optionnellement à des mesures de tels microéchantillons. L'invention s'applique plus particulièrement, mais non exclusivement, à des microéchantillons de sang total d'un mammifère, tel qu'un rat ou une souris.

Il est connu d'utiliser la force centrifuge pour réaliser une séparation de diverses phases ou composants de microéchantillons liquides, tels que du sang total de mammifère, en biologie, en vue d'extraire physiquement par centrifugation au moins une phase de ces microéchantillons. Cependant, la vitesse de rotation élevée qui caractérise les centrifugeuses actuelles interdit en pratique de les faire fonctionner tant que leur charge n'est pas équilibrée, i.e. tant que tous les microéchantillons ne sont pas disposés aux emplacements destinés à les recevoir pendant cette rotation, qui sont typiquement constitués de micro-conteneurs logés dans la centrifugeuse.

Dans le cas de microéchantillons de sang total, différentes techniques permettent de recueillir, de filtrer puis de séparer le sang total en constituants de densités différentes. On utilise généralement une micropipette et des micro-conteneurs qui peuvent être déjà en place dans la centrifugeuse et que l'on remplit à tour de rôle jusqu'à atteindre la capacité totale de remplissage de la centrifugeuse. On actionne alors cette dernière en rotation rapide, pendant une durée adaptée pour que les divers composants du sang (tels que le sérum/ plasma, d'une part, et les globules rouges, d'autre part) soient séparés à l'intérieur de chaque micro-conteneur.

On peut par exemple citer le document US-A-2004/0166551 qui présente une centrifugeuse dont les micro-conteneurs sont des éprouvettes comportant chacune un tronçon supérieur de remplissage en microéchantillon se prolongeant, via un rétrécissement de sa section, par un tronçon inférieur de séparation des constituants de ce microéchantillon, tel que du sang.

Il est également connu d'utiliser un agent d'extraction facilitant cette séparation au sein des microéchantillons de sang total, dont la densité est intermédiaire entre celle des différentes phases du sang et qui est constitué d'un gel polymérique. On peut par exemple citer le document US-A-5 906 744 pour l'utilisation d'un tel gel d'extraction qui est de nature thixotrope.

Lorsque l'on transfère séquentiellement des microéchantillons sanguins dans de tels micro-conteneurs pour centrifugeuse, se pose, outre le problème de l'incertitude de précision volumique due à la micropipette utilisée pour le transfert, le problème précité résidant dans la nécessité de remplir la totalité des micro-conteneurs en microéchantillons pour mettre en oeuvre la centrifugation, ce qui interdit de centrifuger les microéchantillons au fur et à mesure de leur transfert dans ces micro-conteneurs du fait du balourd (i.e. défaut d'équilibrage de la charge dans la centrifugeuse). En général, le plus petit volume de remplissage utilisé dans une centrifugeuse recevant ces micro-conteneurs est d'environ 200 µL.

Un autre inconvénient majeur des systèmes et méthodes connus d'extraction de microéchantillons sanguins par centrifugation est que l'on recourt habituellement à un opérateur pour enchaîner les opérations de prélèvement de ces microéchantillons dans le mammifère concerné et de stockage temporaire de ces derniers, puis les opérations de transfert des microéchantillons prélevés et stockés dans les micro-conteneurs de la centrifugeuse pour procéder à la centrifugation.

Les principaux systèmes automatisés connus pour le prélèvement de microéchantillons sanguins sont issus du domaine de l'imagerie moléculaire en recherche pré-clinique chez de petits mammifères. En particulier, pour mesurer la concentration d'une molécule endogène, on utilise une technique d'imagerie connue sous le nom de tomographie par émission de positons (TEP en abrégé), via la modélisation pharmacocinétique d'un radiotraceur administré par voie intraveineuse. Pratiquement, les concentrations du radiotraceur sont mesurées par cette technique au cours du temps en différents endroits de l'organisme appelés « organes », et dans le compartiment qui délivre le radiotraceur à tous les organes, c'est-à-dire le sang artériel. Les tomographes pour petits animaux permettent d'étendre le champ de la TEP aux approches pré-cliniques chez le rongeur, et de faire bénéficier de cette technique les recherches diagnostiques et thérapeutiques. En contrepartie, il devient difficile de mesurer la fraction artérielle par les méthodes habituelles de prélèvement sanguin. C'est la raison pour laquelle ont été développées des micro-méthodes de mesure des radiotraceurs TEP chez les petits animaux, notamment les rats et les souris.

Une première micro-méthode de mesure a été développée par un groupe de chercheurs canadiens de l'Université de Sherbrooke, ayant pour objet des prélèvements automatiques en continu. Chez les petits animaux (rats et souris), ce groupe a ainsi développé un système (voir article de Convert et al, IEEE Transactions on Nuclear Science, Vol. 54, No. 1, Feb 2007 173) commercialisé par la société AMI (Advanced Molecular Imaging) / Gamma Medica. En résumé, le sang y est extrait de l'animal de façon continue à l'aide d'un tire-seringue et aucun recueil d'échantillons n'est possible, ce qui présente l'inconvénient de ne pas répondre aux besoins des nouveaux traceurs qui nécessitent la récupération ultérieure d'échantillons sanguins.

On peut noter que ce même groupe avait développé en 1998 (voir article de D. Lapointe et al. « A Microvolumetric Blood Counter/Sampler for Metabolic PET Studies in Small Animals », IEEE TRANSACTIONS ON NUCLEAR SCIENCE, VOL. 45, NO. 4, AUGUST 1998) un système permettant d'extraire des microéchantillons sanguins de 10 µL et de les amener automatiquement dans un compteur sensible aux positons. L'échantillonneur de sang commandé par ordinateur était basé sur une segmentation des microéchantillons sanguins avec des microbulles d'air (de 1 à 3 µL). A la fin de l'expérience, le tube ainsi formé pouvait être coupé, rendant ainsi les microéchantillons disponibles pour une analyse biochimique ultérieure. Le traitement de ces échantillons présentait l'inconvénient de ne pas être réalisé de manière automatisée sur la ligne de prélèvement.

Une seconde micro-méthode de mesure a été développée par un groupe de chercheurs américains (Department of Molecular and Médical Pharmacology, UCLA School of Medicine & Department of Molecular and Medical Pharmacology), et portait sur des prélèvements automatisés avec recueil d'échantillons. On pourra utilement se reporter à l'article de Huong-Dun Lin et al., Automatic Control System of a Microfluidic Blood Sampler for Quantitative microPET Studies in Small Laboratory Animals, 2006 IEEE Nuclear Science Symposium Conférence Record), qui décrit un système de prélèvement de sang sur une puce microfluidique accueillant des échantillons de sang de faible volume (180 nL) avec un temps d'échantillonnage réglable. Le temps minimum entre deux échantillons y était de 2 secondes, et la quantité de liquide déposée dépendait de la précision de la micropipette. Sur cette puce microfluidique, seulement 18 échantillons de sang pouvaient être rassemblés.

Les résultats préliminaires ont permis de dériver des cinétiques sanguines avec le radiotraceur « FDG » sur des souris. La perte de sang total étant inférieure à 3,5 µL, l'impact sur le changement physiologique est réduit au minimum. En contrepartie, il faut attendre que la procédure de prélèvements soit terminée pour que les échantillons de sang soient rincés de la puce vers des micro-tubes, étant ensuite comptés dans un détecteur gamma de type « puits ». Si cette contrainte n'est pas très pénalisante au début d'une fonction d'entrée, où les premiers prélèvements sont très rapprochés, il n'en va pas de même pour les derniers échantillons qui sont beaucoup plus espacés et pour lesquels l'intervalle de temps augmente de plus en plus. Ainsi, le comptage gamma du premier des 18 échantillons est réalisé très longtemps après son prélèvement. Comme de surcroît l'activité à mesurer décroît beaucoup elle aussi, le rapport signal sur bruit subit une très forte dégradation.

D'autres inconvénients de cette seconde méthode résident dans la durée d'échantillonnage minimum entre échantillons relativement élevée, étant de 2 secondes, et dans le fait que le comptage du radio-traceur sur le sang total n'est réalisé qu'en fin de séquence (1 h minimum après l'injection), ce qui rend cette méthode difficile à mettre en oeuvre pour des traceurs tel que le ¹¹C dont la demi-vie est de 20 min. (il ne reste qu'un huitième de quantité de traceurs après 1 h, puisque cela équivaut à 3 demi-vies). Et cette décroissance rapide de la grandeur à mesurer se trouve considérablement accrue par la difficulté de séparer le plasma (comportant le radio-traceur) des globules. Concrètement, pour des volumes d'échantillon de 0,18 µL, on peut même considérer comme impossible une séparation suffisante pour permettre de réaliser des mesures différenciées en ligne.

Le document WO-A1-00/21678 présente un système automatisé d'extraction physique en continu d'au moins une phase liquide d'une série d'échantillons liquides, comportant une centrifugeuse pourvue d'une pluralité d'éprouvettes.

Ce système est pourvu d'un dispositif de commande assisté par ordinateur et apte à commander les éléments suivants:
- la centrifugeuse,
- des moyens de transfert destinés à transférer un volume déterminé de chaque échantillon d'un conteneur de stockage à l'une au moins des éprouvettes en attente de remplissage.

Le document US-B1-6 254 834 présente un système d'extraction en discontinu de microorganismes par centrifugation au moyen de tubes présentant un tronçon inférieur de section inférieure à celle du tronçon supérieur.

Les documents US-A-5 399 144, US-A-3 921 898 et US-A1-2005/0026765 présentent des appareils pour adapter ou équilibrer les forces de centrifugation dans une centrifugeuse.

Les documents US-A-3 852 194 et US-A-5 906 744 présentent des éprouvettes contenant un gel polymérique à titre d'agent d'extraction par centrifugation.

Les documents EP-A1-0 688 993 et FR-A1-2 395 037 présentent des systèmes automatisés de prélèvement d'échantillons incorporant des conduits et des raccords.

Les documents US-A1-2003/0199789 et US-A1-2007/0083160 présentent des dispositifs d'analyse et de détection de liquides, notamment pour mesurer la concentration d'un analyte dans un échantillon.

Un but de la présente invention est de proposer un système automatisé d'extraction physique en continu d'au moins une phase liquide d'une série de microéchantillons liquides, comportant une centrifugeuse pourvue d'une pluralité de micro-éprouvettes dont l'une au moins est remplie du microéchantillon correspondant et comporte un tronçon supérieur de remplissage se prolongeant par un tronçon inférieur de séparation de section transversale inférieure à celle du tronçon supérieur, système qui remédie à l'ensemble des inconvénients précités.

A cet effet un systéme automatisé d'extraction selon l'invention est defini dans la revendication 1.

Avantageusement, ladite ou chaque micro-éprouvette ainsi remplie présente une masse qui est supérieure à 100 fois la masse de ce microéchantillon.

On notera que ces caractéristiques témoignent du fait que, selon la présente invention, la masse des micro-éprouvettes utilisées dans la centrifugeuse n'est pas significativement modifiée par les microéchantillons liquides qu'elles contiennent, ce qui permet avantageusement de centrifuger un seul ou seulement quelques microéchantillons selon le taux de charge de la centrifugeuse, sans devoir attendre que toutes les micro-éprouvettes pouvant être logées dans cette dernière soient préalablement remplies des microéchantillons, comme dans l'état antérieur de la technique.

Selon une autre caractéristique de l'invention, lesdits tronçons de chaque micro-éprouvette présentent de préférence des volumes sensiblement identiques qui sont chacun prévus pour contenir pratiquement un microéchantillon.

Egalement à titre préférentiel, ladite centrifugeuse peut être pourvue de moyens de mesure du niveau du microéchantillon dans ledit tronçon supérieur de chaque micro-éprouvette qui en est remplie, tels que des photodétecteurs, de sorte à pouvoir enlever le trop-plein du microéchantillon dans ce tronçon supérieur lors de son remplissage.

On notera qu'en raison des volumes sensiblement identiques qui caractérisent ces deux tronçons de micro-éprouvette, on peut ainsi régler à volonté le volume de chaque microéchantillon dans le tronçon inférieur suite à son introduction dans le tronçon supérieur et à la centrifugation de la micro-éprouvette. En variante, on peut procéder à ce réglage du volume par « arasage » mécanique du niveau de microéchantillon dans le tronçon supérieur, en cas de trop-plein dans ce dernier.

Selon un mode particulièrement avantageux de réalisation de l'invention, chaque micro-éprouvette de ladite centrifugeuse peut contenir en outre, avant son remplissage par le microéchantillon correspondant, au moins un agent d'extraction qui est apte à extraire ladite phase du microéchantillon et dont la densité est choisie intermédiaire entre celle de ladite phase et celle du reste du microéchantillon de telle sorte que, lors de la centrifugation, cet agent migre jusqu'à l'interface entre ladite phase et le reste du microéchantillon en y formant une barrière physique.

On notera que l'incorporation de cet agent d'extraction à chaque micro-éprouvette permet de modifier encore moins la masse de cette dernière après remplissage par le microéchantillon correspondant.

Avantageusement, ledit agent d'extraction comprend un gel polymérique « MAGIC » de type à acides méthacrylique et ascorbique dans de la gélatine et initié par du cuivre.

Le système d'extraction selon l'invention peut comporter en outre une micro-pipette qui est agencée pour transférer une quantité déterminée dudit agent d'extraction dans chaque micro-éprouvette et qui est montée mobile sur un bras articulé.

Selon une autre caractéristique de l'invention, lesdits moyens de transfert sont montés mobiles sur un organe d'actionnement et peuvent comprendre une micropipette et un bras articulé pour son actionnement qui sont identiques ou différents à ladite micropipette et audit bras destinés à transférer ledit agent d'extraction.

Selon une autre caractéristique de l'invention, ledit dispositif de commande est également apte à commander l'organe d'actionnement desdits moyens de transfert.

Avantageusement, si l'on souhaite faire tourner la centrifugeuse avec seulement quelques microéchantillons, alors ceux-ci ne seront pas placés dans des microéprouvettes consécutives mais répartis de manière équilibrée dans cette centrifugeuse.

Avantageusement, chaque microéchantillon contenu dans la micro-éprouvette correspondante peut être un microéchantillon de sang total de mammifère de volume compris entre 1 µL et 100 µL, par exemple environ égal à 8µL dans le cas d'un microéchantillon de sang de souris ou à 30 µL dans le cas d'un microéchantillon de sang de rat. Ladite phase à extraire de chaque microéchantillon peut être alors du plasma sanguin que ledit système sépare d'éléments figurés du sang, tels que des globules rouges.

On notera que ce système d'extraction en continu selon l'invention permet notamment de séparer spatialement et automatiquement les globules contenus dans du sang total, et qu'il est applicable au cas particulier de l'imagerie nucléaire qui requiert de mesurer en ligne l'activité en radiotraceur du plasma sanguin.

On notera toutefois que l'invention couvre potentiellement un domaine beaucoup plus large concernant le prélèvement de microéchantillons d'un liquide par exemple diphasique, la discrétisation des échantillons, et pour chacun d'eux la séparation physique de l'un au moins de ses constituants, de densité supérieure ou inférieure à celle des autres constituants. Quant à la finalité recherchée pour cette extraction, elle peut être de soumettre ces parties de microéchantillons à des actions différentiées, qui, compte tenu des volumes en cause, sont typiquement mais pas nécessairement du comptage radiatif ou de l'analyse, sans exclure que cette finalité concerne le domaine nanofluidique, par exemple.

Une méthode automatisée selon l'invention est defini dans la revendication 5.

Selon le mode précité particulièrement avantageux de réalisation de l'invention, cette méthode d'extraction comprend, préalablement au remplissage de chaque micro-éprouvette, l'incorporation à cette dernière d'un agent d'extraction qui est apte à extraire ladite phase du microéchantillon et dont la densité est choisie intermédiaire entre celle de ladite phase et celle du reste du microéchantillon de telle sorte que, lors de la centrifugation, cet agent étant initialement localisé dans ledit tronçon supérieur puis, par centrifugation, dans ledit tronçon inférieur de chaque micro-éprouvette pour migrer jusqu'à l'interface entre ladite phase et le reste du microéchantillon en y formant une barrière physique, cet agent étant de préférence ledit gel polymérique « MAGIC ».

Selon un mode préférentiel de réalisation de l'invention, on met successivement en oeuvre les étapes suivantes lors de la centrifugation de chaque micro-éprouvette :
a) remplissage de chaque micro-éprouvette par cet agent d'extraction, qui est alors localisé dans le tronçon supérieur,
b) centrifugation de chaque micro-éprouvette contenant cet agent d'extraction, lequel passe du tronçon supérieur au tronçon inférieur,
c) remplissage de chaque micro-éprouvette ainsi obtenue par un microéchantillon dans ledit tronçon supérieur, puis
d) centrifugation de chaque micro-éprouvette pour l'extraction précitée.

On notera que même en l'absence d'agent d'extraction dans chaque micro-éprouvette, le microéchantillon reste avantageusement dans ledit tronçon supérieur pendant le remplissage, du fait de sa viscosité relativement élevée (notamment dans le cas d'un microéchantillon sanguin). En cas d'un excès de microéchantillon dans ce tronçon supérieur, on peut enlever le trop-plein par exemple par « arasage » mécanique ou via les moyens de détection précités.

Avantageusement, l'incorporation dudit agent d'extraction à chaque micro-éprouvette à remplir peut être réalisée par le déplacement d'une micro-pipette actionnée par un bras articulé et venant introduire dans chaque micro-éprouvette une quantité constante déterminée de cet agent, puis par la rotation de ladite centrifugeuse jusqu'à ce que ledit agent parvienne au fond de cette micro-éprouvette.

La méthode de l'invention comprend en outre, avant l'extraction, un transfert d'un volume déterminé de chaque microéchantillon d'un conteneur de stockage à l'une au moins des micro-éprouvettes n'ayant pas encore reçu de microéchantillon, avantageusement via le déplacement d'une micropipette montée sur un bras articulé.

On peut par exemple utiliser pour le transfert des microéchantillons la même micropipette que celle transférant ledit agent.

Selon une autre caractéristique de l'invention, antérieurement à cette extraction :
a) on prélève en continu par un système automatisé de prélèvement les microéchantillons selon une fonction temporelle monotone via l'envoi à des instants tᵢ préprogrammés, par ledit dispositif de commande à ce système de prélèvement, de signaux de prélèvement d'un microéchantillon eᵢ de volume préprogrammé, puis
b) ces microéchantillons eᵢ ainsi prélevés se succèdent spatialement et temporellement dans un conduit de stockage temporaire jusqu'à une extrémité aval de ce conduit où chaque microéchantillon tombe dans un réceptacle où il est ensuite transféré en continu, via ladite pompe doseuse de préférence péristaltique, dans les micro-éprouvettes de ladite centrifugeuse, le synchronisme entre ce transfert et la progression des microéchantillons dans ce conduit de stockage étant assuré par ce dispositif de commande assisté par ordinateur.

Avantageusement, on notera que la durée d'échantillonnage minimale est d'une seconde avec la méthode de prélèvement en continu selon l'invention, ce qui représente la moitié de la durée d'échantillonnage utilisée dans l'état de l'art, comme indiqué ci-dessus.

Une installation automatisée selon l'invention est defini dans la revendication 8.

Avantageusement, chaque microéchantillon liquide issu dudit système d'extraction et soumis à cette mesure est alors constitué de sang total dans lequel le plasma a été séparé et éloigné des globules, cet appareil de mesure étant un compteur gamma absolu de type compteur-puits qui est destiné à mesurer l'activité du plasma seul ou bien des globules seuls de chaque microéchantillon, à travers la micro-éprouvette correspondante.

Encore plus avantageusement, ledit compteur et un robot-poussoir piloté par ordinateur sont alors respectivement agencés au-dessus et au-dessous d'un emplacement de la centrifugeuse qui est destiné à recevoir chaque micro-éprouvette à soumettre à cette mesure, ce robot-poussoir étant apte à pousser momentanément chaque micro-éprouvette de manière à amener sa partie supérieure à l'intérieur d'un blindage du compteur, pour permettre la mesure de l'activité du plasma seul, les globules du sang déposés par centrifugation au fond de chaque micro-éprouvette restant en dehors de ce blindage.

Selon une autre caractéristique de l'invention, ce système automatisé de prélèvement peut avantageusement présenter une succession de conduits pour le passage des microéchantillons dont les élargissements de section transversale sont tous inférieurs ou égaux à 20 % en termes de ratios de surfaces, de telle sorte que les microéchantillons discrétisés dans l'espace et dans le temps qui se suivent dans cette succession de conduits, en particulier ceux dont le volume est inférieur ou égal à 30 µL, ne s'y mélangent pratiquement pas entre eux.

Selon une autre caractéristique de l'invention, ledit système automatisé de prélèvement comporte en amont un dispositif de raccordement fluidique qui est destiné à transférer un liquide à prélever, tel que des microéchantillons sanguins, et qui est destiné à être raccordé à un premier conduit par une première ouverture du dispositif de raccordement, lequel comporte une seconde ouverture traversée par un second conduit destiné à communiquer avec le premier conduit pour transférer ce liquide. Ce premier conduit est avantageusement un cathéter micro-tubulaire souple qui est adapté pour le prélèvement de microéchantillons sanguins dans un petit animal, tel qu'un rat ou une souris, et que l'on implante de préférence à cet effet dans la veine caudale de cet animal.

Ce dispositif de raccordement comporte :
- un raccord fluidique femelle qui définit ladite première ouverture dans laquelle est destiné à être enfoncé ledit premier conduit et qui comprend une surface interne d'emmanchement se terminant par une extrémité radiale femelle où débouche ce premier conduit, et
- un raccord fluidique mâle qui définit ladite seconde ouverture en étant emmanché dans le raccord femelle via sa surface externe et qui se termine par une extrémité radiale mâle à l'intérieur du raccord femelle.

Selon l'invention, ce dispositif de raccordement est tel que ce second conduit est formé d'un micro-tube souple enfoncé dans le raccord mâle axialement au-delà de ladite extrémité mâle, l'extrémité libre du second conduit appuyant de manière étanche contre ladite extrémité femelle de sorte à minimiser le volume mort entre le premier conduit et le raccord mâle.

On notera que ce volume mort minimisé par ce dispositif de raccordement selon l'invention permet de remédier aux inconvénients liés à la circulation de microéchantillons - typiquement de volumes inférieurs ou égaux à 30 µL - avec les dispositifs de raccordement connus, qui sont notamment une traversée retardée des premiers microéchantillons, des pertes de volumes liquides prélevés et des mélanges potentiels des microéchantillons nuisant à leur traçabilité, notamment).

Selon une autre caractéristique de l'invention, ladite surface interne d'emmanchement du raccord femelle peut être une surface conique convergeant vers ladite extrémité femelle avec une même conicité que ladite surface externe du raccord mâle qui converge vers ladite extrémité mâle. De préférence, lesdits raccords mâle et femelle peuvent être alors tous deux des raccords de type « Luer », tels que définis par la norme ISO 59461 de 1986, ou bien de type « Luer Lock », tels que définis par la norme ISO 594-2 de 1998.

De préférence, ledit second conduit peut dépasser de ladite extrémité du raccord mâle d'une longueur axiale qui est au moins égale à la distance minimale dl séparant lesdites extrémités respectives des deux raccords lorsque le raccord mâle est enfoncé en position de connexion dans le raccord femelle, conformément à l'une ou à l'autre desdites normes.

Egalement à titre préférentiel, ledit second conduit est pourvu, autour de sa paroi cylindrique et à proximité de son extrémité libre, d'un moyen de rigidification apte à le rigidifier à l'intérieur dudit raccord femelle.

Avantageusement, ledit moyen de rigidification est formé d'une bague réalisée dans un matériau qui présente une rigidité au moins égale et préférentiellement supérieure à celle dudit second conduit, et qui est apte à être solidarisé avec lui, cette solidarisation pouvant être directe ou par l'intermédiaire dudit raccord fluidique mâle. Dans ce dernier cas, le raccord fluidique mâle est nécessairement solidaire dudit second conduit.

Selon une variante préférentielle, le moyen de rigidification est solidaire de l'extrémité du second conduit qu'il enserre, et il est monté en appui entre ce dernier et ladite surface interne d'emmanchement conique du raccord femelle. A titre d'exemple, ce moyen de rigidification peut être réalisé à base d'une résine polymérique.

Cette bague peut être rapportée autour du second conduit ou bien coextrudée avec ce dernier. Selon une variante plus adaptée à la production industrielle, le raccord mâle peut être réalisé en une seule opération par moulage, après un léger ré-usinage de la forme initiale du moule permettant l'incorporation de ce moyen de rigidification.

Ce second conduit peut par exemple être réalisé en un matériau à base d'un polyéthylène de basse densité (PEBD), par exemple pour minimiser l'absorption de rayonnements bêta en vue d'un comptage de particules réalisé en aval de ce dispositif.

Quant à la succession de conduits que comporte le système de prélèvement selon l'invention, elle présente avantageusement une section transversale sensiblement constante, de sorte que les microéchantillons s'y succédant circulent chacun sur une longueur axiale qui est supérieure à au moins cinq fois la plus grande dimension transversale intérieure de ces conduits (e.g. leur diamètre interne).

Selon une autre caractéristique de l'invention, un dispositif annexe peut être agencé sur ce conduit de stockage temporaire, de sorte à injecter entre deux microéchantillons successifs une quantité de fluides destinés à séparer ces microéchantillons.

Ainsi, l'installation selon l'invention permet notamment de réaliser et d'enchaîner automatiquement (i.e. sans aucune intervention manuelle) une séquence de deux fonctions toutes deux automatisées consistant, d'une part, en un prélèvement de microéchantillons - de préférence sanguins - discrétisés temporellement et spatialement (aisément séparables par exemple via un bris du conduit micro-tubulaire correspondant) et, d'autre part, en une séparation spatiale dans chaque microéchantillon de l'une au moins des phases du liquide pour la soumettre à une action différentiée, notamment en vue de la mesure de la fonction d'entrée pour l'imagerie nucléaire sur des mammifères de petite taille.

On notera que la petite taille des animaux qui sont de préférence utilisés pour le prélèvement des microéchantillons requiert de limiter le volume total de ces microéchantillons à une quantité qui est compatible non seulement avec la santé de l'animal, mais encore avec une perturbation aussi faible que possible de son métabolisme.

Selon une autre caractéristique optionnelle de l'invention, ladite installation automatisée comporte en outre un dispositif de comptage avec une sensibilité de mesure améliorée de particules élémentaires émises par les microéchantillons liquides, le dispositif de comptage comportant un conduit de transfert de ces microéchantillons et, agencés à l'extérieur du conduit, des moyens de détection de ces particules, lesquelles sont atténuées par une paroi du conduit et/ou par ces microéchantillons.

Selon l'invention, ce dispositif de comptage comprend au moins un tronçon de comptage de section transversale oblongue qui relie entre elles deux portions adjacentes de ce conduit présentant une plus grande section de passage et qui présente un ratio [hauteur interne / largeur interne] inférieur à 20 %, où la hauteur et la largeur internes représentent respectivement la plus petite et la plus grande dimensions transversales du tronçon mesurées selon deux directions sensiblement perpendiculaires, lesdits moyens de détection s'étendant transversalement à ce tronçon en regard de toute sa largeur interne et de part et d'autre de celle-ci.

On notera que dans le cas où les particules à compter sont des électrons ou des positons, cette géométrie extrêmement aplatie du tronçon de comptage combinée à sa largeur interne relativement élevée en regard de laquelle sont agencés en dépassement lesdits moyens de détection procure une efficacité de comptage très élevée, typiquement supérieure à 50 % tant pour des radiotraceurs à base de ¹⁸F que de ¹¹C, permettant ainsi des mesures même sur des microéchantillons de sang de volume inférieur à 10 µL (typiquement prélevés sur des souris) et pouvant contenir des radiotraceurs à vie courte (tels que le ¹¹C).

On notera en particulier que cet agencement desdits moyens de détection à la fois en regard et en dépassement de la largeur transversale du tronçon de comptage permet de maximiser l'acceptance géométrique de ces moyens de détection (en optimisant la « capture » des particules à compter), contribuant ainsi à améliorer cette efficacité de comptage.

Par « section de passage », on entend dans la présente description la section transversale interne du tronçon de comptage (de forme oblongue ou aplatie) et celle de chacune des deux portions adjacentes à ce tronçon (de préférence circulaire).

De préférence, ce tronçon de comptage présente un ratio [hauteur interne / largeur interne] compris entre 5 % et 10 %.

Avantageusement, le ratio de la section de passage du tronçon sur celle de chaque portion adjacente peut être inférieur ou égal à 35 % et, encore plus avantageusement, être inférieur à 25 %.

Egalement avantageusement, ladite hauteur interne du tronçon de comptage peut être inférieure à 20 % du diamètre interne de chacune des portions cylindriques adjacentes, et ladite largeur interne de ce tronçon peut être supérieure à 1,3 fois ce diamètre interne.

Selon un mode préférentiel de réalisation de l'invention, ce tronçon de comptage présente une section transversale sensiblement rectangulaire dont les grands côtés et/ou les petits côtés sont incurvés selon des courbures symétriques l'une de l'autre, de sorte que ce tronçon présente au moins en partie une face externe sensiblement convexe ou concave.

Selon une autre caractéristique préférentielle de l'invention, ledit conduit est adapté à la circulation de microéchantillons sanguins, ladite hauteur interne du tronçon de comptage étant comprise entre 100 µm et 250 µm et ladite largeur interne de ce tronçon étant supérieure à 1,3 mm, alors que la ou chaque portion cylindrique adjacente présente un diamètre compris entre 0,8 mm et 1,2 mm.

Encore plus préférentiellement, l'aire de la section de passage dudit tronçon de comptage est comprise entre 0,15 mm² et 0,25 mm², et ce tronçon peut alors présenter une longueur comprise entre 30 mm et 40 mm de sorte à pouvoir contenir un microéchantillon sanguin d'environ 8 µL en regard desdits moyens de détection.

Spécifiquement lorsque les particules à compter sont des électrons ou des positons issus de rayonnements radioactifs bêta émis par les microéchantillons, ledit tronçon de comptage présente avantageusement une paroi d'épaisseur e, exprimée en µm, et de masse volumique d, exprimée en g/cm³, dont le produit e.d est inférieur à 100 et de préférence inférieur à 50, de telle sorte que l'atténuation par ce tronçon des particules à compter soit minimisée.

Selon une autre caractéristique avantageuse de l'invention qui concerne notamment de telles particules de type électrons ou positions, ledit tronçon de comptage est à base d'un polymère thermoformé de masse volumique inférieure ou égale à 1,5 g/cm³, de préférence un polyimide de dénomination « Kapton », et ce tronçon présente une paroi d'épaisseur inférieure à 50 µm et de préférence inférieure à 30 µm.

On notera que cette sélection d'un tel polyimide de type « Kapton » permet d'obtenir cette valeur très faible pour le produit e.d précité, en comparaison des valeurs usuelles de ce produit généralement comprises entre 150 et 200 pour les conduits connus réalisés en PEBD, qui présentent une densité inférieure à celle de ce polyimide « Kapton » mais une épaisseur très nettement supérieure.

Selon une autre caractéristique de l'invention, lesdits moyens de détection comportent avantageusement deux ensembles de détecteurs respectivement disposés contre ou à proximité immédiate de deux grandes faces sensiblement planes dudit tronçon de comptage qui sont distantes entre elles de ladite hauteur et qui sont reliées entre elles par deux petites faces de ce tronçon, lesquelles sont dépassées dans le sens de ladite largeur par ces ensembles de détecteurs afin de maximiser l'acceptance géométrique de ces derniers.

Selon une autre caractéristique de l'invention, lesdites grandes faces du tronçon de comptage présentent chacune en leur côté externe une forme qui est avantageusement de type légèrement convexe, ce qui est particulièrement bien adapté vis-à-vis de la pression variable inhérente aux aspirations successives des microéchantillons prélevés via ladite pompe péristaltique.

Selon une autre caractéristique de l'invention, l'installation selon l'invention peut être utilisée pour mesurer des fonctions d'entrée de mammifères pour l'imagerie nucléaire, en particulier pour l'imagerie quantitative de traceurs en tomographie par émission de positons (TEP), chaque microéchantillon liquide étant du sang de ce mammifère, lequel est avantageusement un rat ou une souris, chaque microéchantillon présentant alors un volume inférieur ou égal à 30 µL.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec les dessins joints, parmi lesquels :
la figure 1 est une vue schématique partielle d'une installation automatisée de prélèvement et de mesure selon l'invention incluant un dispositif de comptage de particules, telles que des particules bêta, agencé en amont d'un dispositif d'échantillonnage des microéchantillons prélevés,
la figure 2 est une vue partielle en coupe radiale d'un dispositif de raccordement à raccords mâle et femelle de type connu qui est destiné à être connecté, d'une part, à un cathéter et, d'autre part, à un micro-tube souple pour le prélèvement de microéchantillons,
la figure 3 est une vue partielle en coupe radiale d'un dispositif de raccordement à raccords mâle et femelle selon l'invention qui est destiné à être connecté à ce cathéter et qui forme une partie du système de prélèvement selon l'invention,
la figure 4 est une photographie illustrant la forme et les dimensions relatives, en comparaison d'une pièce de 10 centimes d'euro, d'un conduit de ce système de prélèvement et de mesure incluant un tronçon aplati du dispositif de comptage de la figure 1 qui est apte à optimiser ce comptage de particules,
la figure 4a est une vue schématique en section transversale de ce tronçon aplati selon l'invention équipé des deux ensembles de détecteurs illustrés à la figure 1,
la figure 5 est un graphique illustrant l'efficacité de détection en radiotraceur ¹⁸F en fonction du seuil de détection, pour trois types de conduits de prélèvement comprenant ce tronçon de comptage aplati selon l'invention et, à titre d'essais comparatifs, deux micro-tubes cylindriques,
les figures 6a et 6b sont deux vues schématiques en coupe longitudinale illustrant la forme et le contenu d'une micro-éprouvette selon l'invention remplie d'un microéchantillon à base de sang total, avant et après centrifugation, respectivement, et
la figure 7 est une vue schématique d'un système d'extraction automatisé selon l'invention, qui est pourvu à sa sortie d'un système de mesure selon l'invention formé, à titre d'exemple, d'un compteur gamma de type à puits.

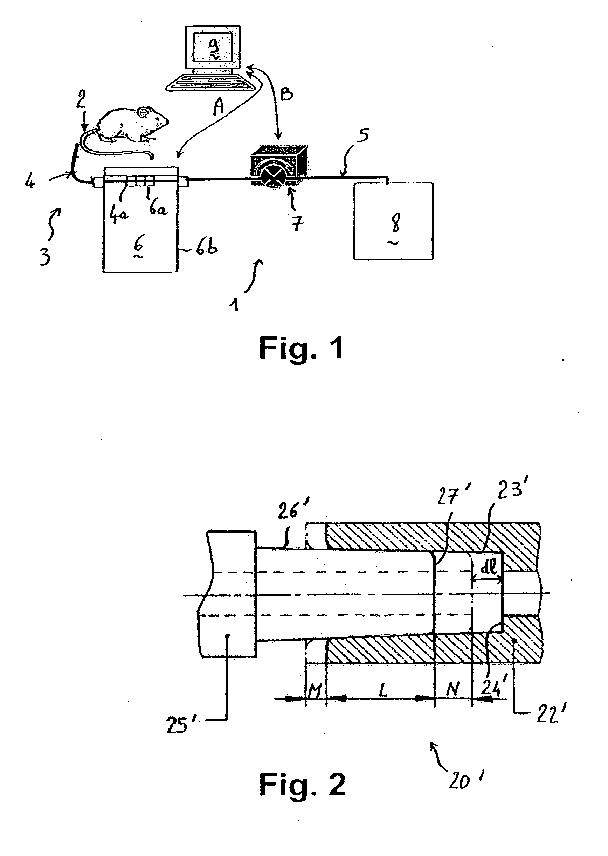

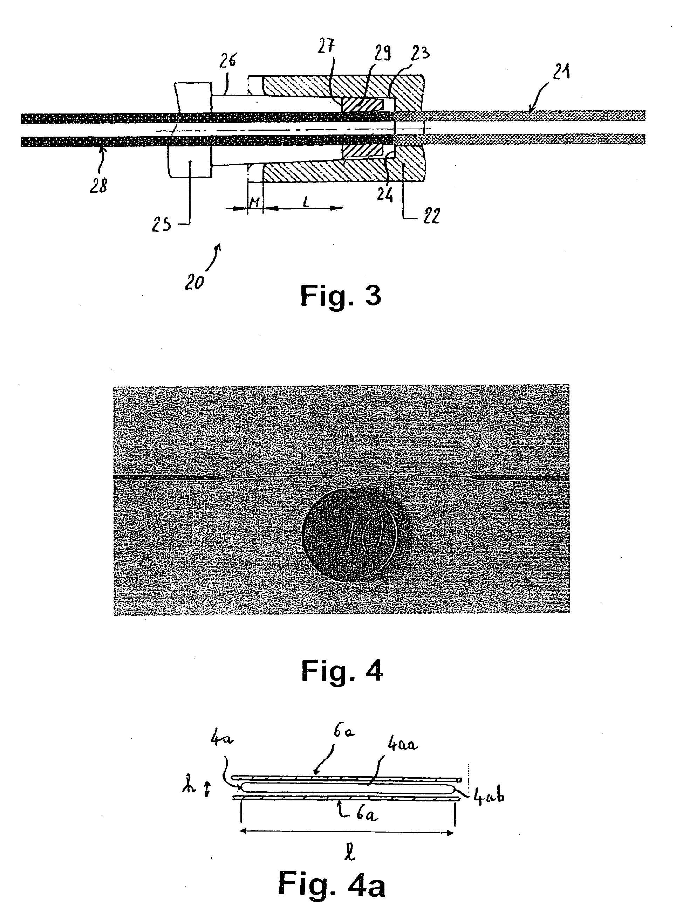

La figure 1 illustre à titre d'exemple une installation 1 automatisée pour procéder successivement et en continu au prélèvement, au stockage temporaire et à des mesures de microéchantillons sanguins d'un petit mammifère 2 par exemple de type rat ou souris, au moyen d'un système de prélèvement 3 incluant une succession de conduits 4 et 5 de type micro-tubes ou capillaires souples. Ce système de prélèvement 3 comporte essentiellement :
- un cathéter 21 qui est équipé d'un dispositif de raccordement 20 (tous deux visibles à la figure 3) et qui est destiné à aspirer par à-coups une même quantité de sang à prélever, via une pompe doseuse 7 qui compte tenu de cette application est de type péristaltique,
- un système de comptage 6 de particules présentes dans les microéchantillons prélevés, qui est dans cet exemple un compteur de particules bêta 6 pour des microéchantillons de sang total et qui est placé au plus près du point de prélèvement en étant quasiment au contact d'un tronçon de mesure 4a de cette succession de conduits 4, 5 (comme développé ci-après, ce tronçon 4a présente des caractéristiques de forme et de matériau optimisées pour ce comptage et est centré par rapport aux diodes de détection 6a que comporte le compteur 6),
- un système d'échantillonnage 8 agencé en aval de la pompe péristaltique 7, où ces microéchantillons prélevés et analysés sont stockés et traités, et
- un dispositif de commande 9 assisté par ordinateur pour la commande de l'ensemble du système 3, en incluant cette pompe 7 (voir les doubles flèches A et B à la figure 1 pour cette commande).

Selon l'invention, la succession de conduits 4 et 5 est telle que les élargissements de section transversale présents sur ces conduits sont tous inférieurs ou égaux à 20 % en termes de ratios de surfaces, de sorte que les microéchantillons se suivant dans cette succession de conduits 4 et 5 ne s'y mélangent pratiquement pas entre eux par diffusion. De cette manière, ces microéchantillons sont discrétisés dans l'espace et dans le temps

Comme illustré à la figure 3, le dispositif de raccordement 20 selon l'invention comporte, connecté au cathéter souple 21 qui est destiné à être implanté dans la veine caudale du mammifère 2 et qui présente par exemple un diamètre extérieur de 1,5 mm et un diamètre intérieur de 0,8 mm :
- un raccord fluidique femelle 22 dans lequel est enfoncé le cathéter 21 et qui comprend une surface interne d'emmanchement conique 23 convergeant vers une extrémité radiale femelle 24 où débouche le cathéter 21,
- un raccord fluidique mâle 25 qui est emmanché dans le raccord femelle 22 via sa surface externe conique 26 avec la même conicité que cette surface interne 23 du raccord femelle 22, et qui converge vers une extrémité radiale mâle 27, et
- un micro-tube souple 28 par exemple en PEBD (polyéthylène de basse densité, tel qu'un « PEBD 50 » ou un « PEBD 100 ») qui est adapté pour acheminer vers un conteneur de stockage les microéchantillons prélevés en étant discrétisés dans l'espace et dans le temps, et qui est enfoncé dans le raccord mâle 25 axialement au-delà de l'extrémité mâle 27 et de manière immédiatement adjacente à l'extrémité femelle 24 en regard, de sorte à minimiser le volume mort localisé à l'intérieur du raccord femelle 22 entre ces deux extrémités respectives 27 et 24.

Plus précisément, ces raccords 22 et 25 sont des raccords de type « Luer », tels que définis par la norme ISO 59461 de 1986, ou bien de type « Luer Lock », tels que définis par la norme ISO 594-2 de 1998.

De préférence, le micro-tube 28 dépasse de l'extrémité mâle 27 d'une longueur axiale qui est au moins égale à la distance minimale dl séparant les extrémités 27 et 24 lorsque le raccord mâle 25 est enfoncé en position de connexion dans le raccord femelle 22, conformément à l'une ou à l'autre de ces normes. En fait et comme illustré à la figure 3, ce micro-tube 28 appuie de manière étanche contre l'extrémité femelle 24.

Le raccord mâle 25 selon l'invention permet de s'affranchir du volume mort inhérent à la différence de longueur dl précitée en référence aux dispositifs de raccordement connus illustrés à la figure 2.

Comme illustré à cette figure 3, le micro-tube 28 de l'invention est pourvu, à son extrémité libre adjacente au cathéter 21, d'un anneau de rigidification 29 monté entre la paroi cylindrique du micro-tube 28 et la surface interne 23 du raccord femelle 22. Avantageusement, le moyen de rigidification 29 est formé d'une bague réalisée dans un matériau de rigidité au moins égale et préférentiellement supérieure à celle du micro-tube 28, et apte à se solidariser avec lui, cette solidarisation pouvant être directe ou par l'intermédiaire du raccord mâle 25. Dans ce dernier cas, le raccord mâle 25 est nécessairement solidaire du micro-tube 28.

Selon une variante préférentielle, la bague 29 est solidaire de l'extrémité du micro-tube 28 et peut être réalisée à base d'une résine polymérique. Cette bague 29 peut être rapportée autour du micro-tube 28 ou bien coextrudée avec ce dernier.

On a fabriqué le dispositif de raccordement 20 selon l'invention à partir d'un dispositif 20' de l'art antérieur, en y perçant un orifice de section annulaire pour y introduire à force le micro-tube 28 (la coupe franche de l'extrémité étant perpendiculaire à l'axe du micro-tube 28).

On notera que le raccord mâle 25 selon l'invention est ainsi compatible avec toute la gamme des matériels standards « Luer » femelle selon les normes précitées, et qu'il permet avantageusement de supprimer le volume mort dans le dispositif de raccordement 20 (ce volume mort pouvant correspondre à une augmentation de section transversale de 20 % par rapport à la section minimale du conduit) et, par conséquent, de transférer notamment des microéchantillons sanguins sans risque de mélange de ceux-ci (avec donc une traçabilité parfaite, les échantillons en sortie de ligne étant conformes à ceux en entrée de ligne). En outre, cela permet de ne pas devoir attendre le prélèvement de trop nombreux microéchantillons pour commencer les mesures ou analyses, et également de ne pas gaspiller un volume de liquide correspondant au volume mort.

Comme illustré aux figures 4 et 4a, on a prévu dans la succession de conduits de prélèvement 4, 5 selon l'invention un tronçon de comptage aplati 4a qui relie entre elles deux portions cylindriques et qui est conçu pour optimiser le comptage de particules par le dispositif 6 de la figure 1 (tel qu'un compteur bêta, que l'on utilise avantageusement pour la mesure de la fonction d'entrée du petit mammifère 2). On a ainsi choisi de réduire le volume de détection et d'augmenter l'efficacité de comptage.

A cet effet, on a façonné par thermoformage ce tronçon aplati 4a de section transversale oblongue qui est réalisé de préférence en un polyimide de dénomination « Kapton » (de masse volumique égale à 1,42 g/cm³, avec une paroi de 25 µm ±10 % d'épaisseur) et qui relie entre eux deux micro-tubes cylindriques par exemple en PEBD (polyéthylène de basse densité) de diamètre interne égal à 1 mm environ. Comme illustré à la figure 4a, les diodes de détection 6a du dispositif 6 de comptage sont agencées de part et d'autre des faces externes des grands côtés 4aa du tronçon 4a, par rapport à sa plus petite dimension transversale constituée ici par sa hauteur h.

Dans cet exemple de réalisation, le tronçon aplati 4a présente une section transversale sensiblement rectangulaire dont les faces externes des petits côtés 4ab sont incurvées selon des courbures convexes symétriques l'une de l'autre, et ce tronçon présente un ratio [hauteur interne h / largeur interne l] d'environ 8 %, où la hauteur et la largeur internes sont respectivement égales à 130 µm et à 1490 µm.

Quant au ratio surfacique de la section de passage du tronçon aplati 4a - d'environ 0,1937 mm² - sur celle de chaque portion cylindrique adjacente (de section interne d'environ 0,785 mm²), il est légèrement inférieur à 25%.

En outre, le tronçon aplati 4a présente une paroi d'épaisseur e et de masse volumique d dont le produit e.d est sensiblement égal à 35,5 (avec e = 25 µm et d = 1,42 g/cm³), ce qui est très nettement inférieur aux valeurs usuellement utilisées qui sont généralement comprises entre 150 et 200 pour les micro-conduits réalisés en PEBD (qui présentent une densité inférieure à celle du « Kapton » mais une épaisseur nettement supérieure), de telle sorte que l'atténuation par ce tronçon 4a selon l'invention des particules à compter, telles que des électrons ou des particules bêta, est nettement minimisée.

Comme illustré à la figure 4a, le tronçon aplati 4a est équipé, en regard de ses grandes faces 4aa - qui sont de préférence légèrement convexes - et venant en dépassement de ses petites faces 4ab, de deux ensembles desdites diodes de détection 6a aptes à compter lesdites particules de chaque microéchantillon liquide y circulant (ce dépassement des diodes 6a permet d'optimiser leur acceptance géométrique, et donc la « capture » des particules à compter).

Le procédé de thermoformage utilisé pour l'obtention de ce tronçon aplati 4a selon l'invention comprend notamment les étapes suivantes :
- mise en place du tronçon 4a à froid dans le gabarit de formage,
- raccordement de ses deux extrémités à des micro-tubes souples pour la mise en pression,
- mise sous pression (1,5 bars de pression relative),
- chauffage du gabarit à 300° C pendant 15 minutes,
- refroidissement sous pression, et
- chute lente de la pression après refroidissement.

On obtient par ce thermoformage un tronçon aplati de comptage 4a dont les deux grandes faces 4aa présentent chacune une superficie d'environ 1,5 mm x 35 mm soit 52,5 mm², ce qui se traduit par une minimisation de l'épaisseur de liquide que le positon ou l'électron doit traverser pour atteindre les détecteurs 6a.

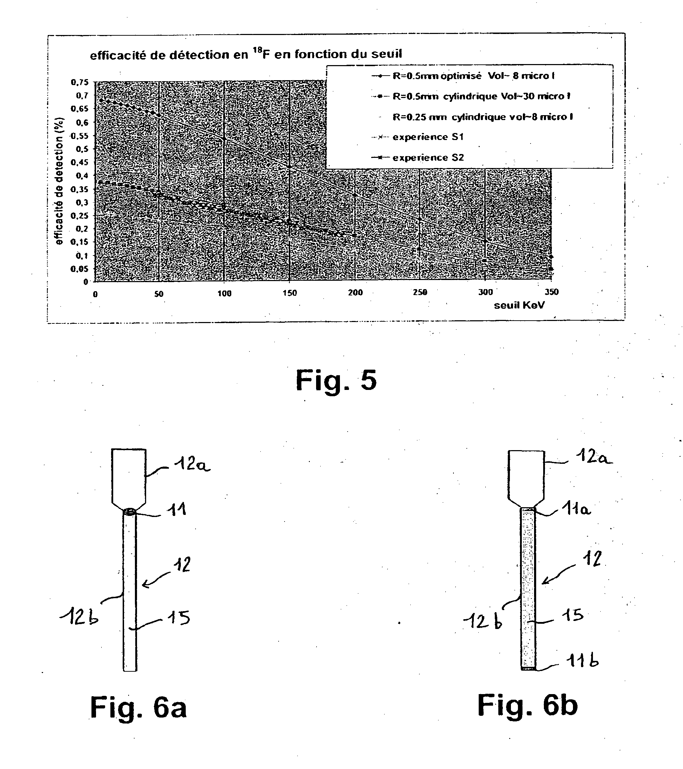

Le graphique de la figure 5 illustre, sous forme de courbes de simulation confirmées par l'expérience, les résultats d'efficacité de comptage obtenus pour deux séries d'expériences S1 et S2, réalisées chacune :
- avec un conduit selon l'invention de rayon égal à 0,5 mm pour les portions cylindriques et incorporant ce tronçon 4a aplati, avec un volume de microéchantillon sanguin prélevé de 8 µL (compatible avec une souris),
- avec un premier conduit « témoin » cylindrique sur toute sa longueur (i.e. sans tronçon aplati) présentant un rayon de 0,5 mm, avec un volume de microéchantillon sanguin prélevé de 30 µL (compatible avec un rat), et
- avec un second conduit « témoin » cylindrique sur toute sa longueur (i.e. sans tronçon aplati) présentant un rayon de 0,25 mm, avec un volume de microéchantillon sanguin prélevé de 8 µL.

Grâce à ce tronçon aplati 4a, on note que l'efficacité de détection des positons augmente, passant de 32 % avec les micro-tubes cylindriques à plus de 60 % avec le micro-tube de l'invention, pour le seuil minimum (d'environ 46 Kev). Le gain est même plus important car un conduit micro-tubulaire cylindrique compatible avec 8 µL donnerait environ 25 % d'efficacité. Le micro-tube optimisé selon l'invention permet ainsi de travailler avec des échantillons de 8 µL, en atteignant plus de 60 % d'efficacité au seuil minimum, contre seulement 25 % avec un micro-tube entièrement cylindrique sur sa longueur, ce qui rend le système de prélèvement 3 selon l'invention particulièrement bien adapté à la mesure de la fonction d'entrée d'une souris.

En relation avec la figure 1, on va à présent décrire plus précisément le dispositif et la méthode de comptage des particules bêta utilisés en relation avec le système de prélèvement automatisé 3.

Quelques centimètres en aval du premier conduit 4 de prélèvement, chaque microéchantillon passe au plus près du compteur de particules bêta 6, pour lequel l'épaisseur de la paroi du conduit n'apporte qu'une très faible atténuation. Le tronçon aplati 4a, fixé dans le boîtier 6b du compteur 6, permet de minimiser le taux d'annihilation des positons dans les parois, et sa géométrie est telle qu'il peut contenir le volume d'un échantillon (de 30 µL ou de 8 µL) correctement centré sous les six diodes de détection en silicium (10 x 10 x 0,3 mm³) entourant le tronçon 4a, comme illustré à la figure 1. Ces diodes 6a sont elles-mêmes entourées d'un blindage de plomb de 2 cm d'épaisseur destiné à supprimer le bruit physique venant des photons issus de l'animal 2. Le reste de ce système de mesure 6 comporte une carte électronique de traitement et interfaçage, l'ensemble privilégiant la compacité et la robustesse en formant un boîtier 6b de petites dimensions (8 x 10 x 4 cm³).

Il est avantageux, pour minimiser la probabilité d'anihilation dans le sang d'un positon issu de la radioactivité béta, de donner au micro-tube souple la forme aplatie du tronçon 4a, au moins à l'endroit de son passage devant les diodes 6a. Par ailleurs, comme expliqué précédemment, cette configuration géométrique assure un étalement du liquide en une nappe fine, ce qui augmente la surface de liquide en regard des surfaces détectrices. La configuration retenue pour le système de mesure 6 est la suivante.

Le tronçon aplati 4a, de 25 µm d'épaisseur de paroi, est placé en « sandwich » entre les diodes 6a de 0,3 mm d'épaisseur (trois diodes 6a en haut et trois autres en bas).

L'électronique de lecture de ces diodes 6a ainsi que l'électronique gérant l'acquisition et le transfert de données ont été intégrées dans un unique module électronique, qui a été optimisé afin de réduire au maximum le bruit électronique permettant de minimiser le seuil de détection pour une meilleure efficacité.

L'électronique « front-end » (mise en forme et discriminateur) est assurée par un « ASIC » (comprenant 16 voies, un seuil commun, 16 sorties + 1 OR). Le seuil est réglable par l'utilisateur. La carte d'acquisition est une carte de test « USB » configurable qui tire parti de la souplesse de l'interface « USB » des ordinateurs personnels et des progrès des circuits numériques configurables « FPGA » (« Field Programmable Gate Array »). Elle permet de traiter rapidement un grand nombre de signaux et est programmable depuis l'interface d'un ordinateur.

Le schéma de principe est illustré à la figure 1. Le conduit de prélèvement 4 se prolonge par le tronçon aplati 4a qui prend le relais à l'intérieur du boîtier 6b, et le sang ressort de l'autre côté de celui-ci. Cette circulation du sang est réalisée grâce à la pompe péristaltique 7. Le volume des microéchantillons prélevés est réglable, ainsi que leur temps de prélèvement. Ces paramètres sont pilotés par l'ordinateur du dispositif de commande 9 de l'installation 1.

L'espacement minimum entre deux prélèvements de microéchantillons est de 1 seconde. Afin de couvrir la dynamique d'une cinétique de radiotraceur dans le sang, les microéchantillons sont prélevés toutes les secondes après l'injection pendant environ 30 secondes à 1 minute, puis ils sont prélevés de façon plus espacée dans le temps, la pente de la courbe étant plus faible pendant cette phase.

Les connexions entre les divers conduits et le boîtier 6b sont conçues pour éviter toute perte de volume des microéchantillons et toute diffusion entre deux microéchantillons adjacents.

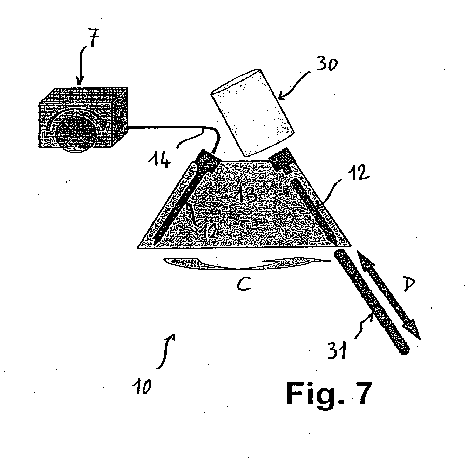

Ces microéchantillons sanguins sont ainsi prélevés de façon discrète dans l'espace et dans le temps, et ils progressent sans diffuser jusqu'au système d'échantillonnage 8 où ils sont stockés et avantageusement soumis à l'extraction d'une au moins de leurs phases ou de leurs composants, mise en oeuvre par centrifugation comme cela va être décrit ci-après en référence aux figures 6a, 6b et 7.

Comme illustré aux figures 6a et 6b, le système automatisé d'extraction en continu 10 que comporte l'installation 1 selon l'invention, en aval du système de prélèvement 3 et de la pompe péristaltique 7, est destiné à séparer, à l'intérieur de chaque microéchantillon liquide 11, l'une des phases 11a ou l'un des composants ayant une densité significativement différente du reste 11b du microéchantillon, via une centrifugation mise en oeuvre dans des micro-éprouvettes 12 présentant chacune un tronçon supérieur de remplissage 12a et un tronçon inférieur de séparation 12b.

Les microéchantillons 11 arrivent en se succédant spatialement dans le conduit de stockage temporaire des échantillons, adjacent au système d'échantillonnage 8 visible à la figure 1. A l'extrémité aval de ce conduit de stockage, chaque microéchantillon 11 tombe dans un réceptacle où vient le prendre une micro-pipette qui est montée sur un bras articulé (non illustrée) et qui s'adapte à l'extrémité évasée de ce conduit, le synchronisme entre ces actions et la progression des microéchantillons 11 dans le conduit de stockage étant assuré par le dispositif de commande 9 assisté par ordinateur.

Comme illustré à la figure 7, cette micro-pipette transfère successivement les microéchantillons 11 ainsi prélevés dans des micro-éprouvettes 12 spécifiques aptes à les recevoir (le volume de chaque microéchantillon 11 étant compris entre 1 µL et 100 µL) et à tourner à vitesse élevée sur une centrifugeuse 13, laquelle est de type carrousel avec des emplacements aptes à recevoir ces micro-éprouvettes 12. Cette centrifugeuse 13 est également commandée par le dispositif de commande 9 informatisé. Ainsi, la totalité du système d'extraction 10 est commandée par ordinateur, en synchronisme avec le système de prélèvement 3 et la micro-pipette de transfert des microéchantillons.

Comme expliqué précédemment en relation avec la présente invention, il convient de noter que l'une au moins ou chaque micro-éprouvette 12 remplie par le microéchantillon 11 correspondant présente une masse supérieure à 10 fois et de préférence à 100 fois la masse de ce microéchantillon 11, de sorte que l'on puisse réaliser à un instant donné l'extraction par centrifugation d'un microéchantillon 11 contenu dans une seule micro-éprouvette 12 ou une partie seulement des micro-éprouvettes 12 pouvant être reçues dans la centrifugeuse 13, au fur et à mesure de leur remplissage.

Le procédé d'extraction mis en oeuvre au moyen du système 10 comprend la succession d'étapes suivantes :
- pour au moins une micro-éprouvette 12 placée dans un logement du carrousel de la centrifugeuse 13 et n'ayant pas encore reçu de microéchantillon, la micro-pipette de transfert prélève dans ledit réceptacle un microéchantillon et l'introduit dans cette micro-éprouvette 12,
- la centrifugeuse 13 tourne (voir flèche C) jusqu'à ce que, pour chaque microéchantillon 11, l'un au moins des composants 11a, tel que le plasma, ait été séparé du reste 11 b, dans ce cas les éléments figurés du sang (e.g. les globules rouges), puis s'arrête, puis
- le dispositif d'éjection éjecte la ou les micro-éprouvette(s) ayant reçu un microéchantillon 11.

On notera que le rotor de la centrifugeuse 13 peut assurer également la fonction de positionnement des micro-éprouvettes 12 devant la micro-buse de remplissage 14 de la centrifugeuse 13.

De préférence, ce procédé d'extraction selon l'invention comprend l'adjonction préalable à chaque micro-éprouvette 12 d'un agent d'extraction 15 (voir figures 6a et 6b) dont la densité est comprise entre la densité de la phase du liquide à séparer et celle du reste du liquide. A titre encore plus préférentiel dans le cadre de microéchantillons sanguins, la densité de cet agent 15 est prévue sensiblement égale à la valeur médiane entre la densité du plasma sanguin et celle des globules. Avantageusement, on utilise à titre d'agent d'extraction 15 un gel polymérique « MAGIC » de type à acides méthacrylique et ascorbique dans de la gélatine et initié par du cuivre, de sorte que lors de la centrifugation, cet agent 15 initialement déposé au fond de chaque micro-éprouvette 12 migre jusqu'à l'interface entre ladite phase à extraire 11a et le reste 11 b du microéchantillon 11, en y formant une barrière physique par laquelle transite la phase 11b qui vient se déposer au fond de la micro-éprouvette 12. Ainsi, dans le cas de microéchantillons 11a de sang total, seuls les éléments figurés 11 b transitent dans le gel 15 pour atteindre le fond de chaque micro-éprouvette 12, le plasma 11a extrait restant en surface du gel et la distance entre plasma 11 a et éléments figurés 11 b étant alors maximale (voir figures 6a et 6b).

Plus précisément, on met successivement en oeuvre les étapes suivantes lors de la centrifugation des micro-éprouvettes 12 :
a) remplissage de chaque micro-éprouvette 12 par le gel 15, qui est alors localisé dans le tronçon supérieur 12a,
b) mise en place des micro-éprouvettes 12 dans le rotor de la centrifugeuse 13,
c) centrifugation des micro-éprouvettes 12 contenant ce gel 15, lequel remplit intégralement le tronçon inférieur 12b,
d) dépôt d'un microéchantillon dans le tronçon 12a de chaque micro-éprouvette 12 ainsi obtenue, puis
e) centrifugation des micro-éprouvettes 12 pour réaliser l'extraction précitée.

Les étapes a) et b) peuvent être interverties sans que l'on sorte du cadre de l'invention.

Selon une variante de l'invention, les étapes a) et c) peuvent être réalisées préalablement à l'étape b), éventuellement sur une autre installation. Dans ce cas, l'emploi de micro-éprouvettes 12 pré-remplies de gel et pré-centrifugées permet avantageusement de simplifier les opérations en ligne. On pourra de manière encore plus avantageuse utiliser un plateau de centrifugeuse préalablement rempli de micro-éprouvettes pré-remplies et pré-centrifugées.

Afin de minimiser le décalage temporel entre le temps de prélèvement d'un microéchantillon et celui de son comptage en sang total et en plasma, et compte tenu du fait que les prélèvements de microéchantillons sont effectués à des intervalles de temps très inégaux, on notera que ce système d'extraction selon l'invention permet d'effectuer indifféremment la centrifugation d'un seul microéchantillon 11, de quelques microéchantillons 11 ou encore de la totalité des microéchantillons que peut contenir la centrifugeuse 13, du fait que la masse de chaque micro-éprouvette 12 n'est pas significativement modifiée par l'introduction de chaque microéchantillon 11. On notera également que l'adjonction de l'agent d'extraction 15 de type gel « MAGIC » avant remplissage de chaque micro-éprouvette 12 par un microéchantillon 11 rend encore plus négligeable la masse de ce dernier.

On peut ainsi procéder de manière continue à une centrifugation « en ligne » au fur et à mesure du remplissage de chaque micro-éprouvette 12 (par exemple dès qu'un microéchantillon 11 est déposé ou bien dès qu'une phase de pause suffisamment longue - au moins une minute - se présente) indépendamment du taux de charge de la centrifugeuse 13, contrairement aux systèmes connus de centrifugation qui requièrent le remplissage complet des micro-éprouvettes positionnées dans la centrifugeuse pour assurer l'équilibrage du rotor (i.e. l'absence de balourd) avant d'autoriser la phase de centrifugation.

Comme illustré également à la figure 7, après extraction automatisée d'une micro-éprouvette 12 du rotor de la centrifugeuse 13, cette micro-éprouvette centrifugée peut passer devant un dernier système de mesure 30 d'une grandeur physique pour laquelle la paroi de chaque micro-éprouvette 12 est transparente, et qui est ici un compteur gamma de type comptage-puits effectuant un comptage gamma du plasma seul. Ce compteur gamma 30 coopère avec un robot-poussoir 31 piloté par ordinateur qui est positionné de l'autre côté de la centrifugeuse 13 et qui est apte à pousser (voir flèche D) chaque micro-éprouvette 12 de manière à amener la partie supérieure de cette dernière à l'intérieur d'un blindage de ce compteur 30, pour permettre la mesure de l'activité du plasma 11 a seul, les éléments figurés 11 b du sang déposés par centrifugation au fond de chaque micro-éprouvette 12 restant en dehors de ce blindage.

De manière générale en référence à l'installation 1 automatisée selon l'invention, on notera que le décalage temporel entre l'instant de prélèvement d'un microéchantillon et celui de son comptage en plasma doit être minimisé pour éviter que la décroissance radioactive naturelle du radiotraceur diminue la statistique de comptage lors de la phase de comptage en plasma. Pour répondre à ce besoin, on peut réaliser un traitement asynchrone des microéchantillons, pour permettre l'acheminement d'un microéchantillon depuis son point de prélèvement jusqu'au séparateur plasma sans attendre que le microéchantillon suivant soit prélevé. Ce traitement n'est possible que dans des phases où la fréquence des prélèvements est lente. Dans les phases de prélèvement à fréquence rapide, les microéchantillons successifs sont acheminés au fur et à mesure que les suivants sont prélevés. Par contre, lorsqu'un microéchantillon est prélevé dans une séquence lente, l'automate de l'invention le discrétise, et l'emmène seul à travers la chaîne d'analyse.

On notera par ailleurs que l'installation automatisée de l'invention est particulièrement bien adaptée à la recherche pré-clinique pour l'imagerie quantitative de nouveaux traceurs en tomographie par émission de positons (TEP). Dans ce cas, le liquide considéré est du sang, et l'application consiste à mesurer la fonction d'entrée pour de petits animaux comme les rats ou les souris. La faible taille de ces animaux, et donc la faible quantité totale de sang qu'ils possèdent, limitent le volume de chaque microéchantillon à environ 30 µL pour les rats, et à environ 8 µL pour les souris.

## Revendications

1. Système automatisé (10) d'extraction physique en continu d'au moins une phase liquide (11 a) d'une série de microéchantillons liquides présentant chacun un volume inférieur à 100 µL (11), comportant une centrifugeuse (13) pourvue d'une pluralité de micro-éprouvettes (12) dont l'une au moins est remplie du microéchantillon correspondant et comporte un tronçon supérieur de remplissage (12a) se prolongeant par un tronçon inférieur de séparation (12b) de section transversale inférieure à celle du tronçon supérieur, ce système est pourvu d'un dispositif de commande (9) assisté par ordinateur et apte à commander les éléments suivants, tous inclus dans ce système :
- la centrifugeuse (13),
- des moyens de transfert destinés à transférer, via une pompe doseuse péristaltique (7) agencée en amont de cette centrifugeuse et également incluse dans ce système, un volume déterminé de chaque microéchantillon d'un conteneur de stockage (8) à l'une au moins des micro-éprouvettes en attente de remplissage, ces moyens de transfert comprenant une micropipette qui est montée mobile sur un bras articulé actionnant cette micropipette sous la commande du dispositif de commande pour remplir chaque micro-éprouvette dans la centrifugeuse, et
- des moyens d'éjection et de mise en place des micro-éprouvettes,
ladite ou chaque micro-éprouvette ainsi remplie présentant une masse qui est supérieure à 10 fois et, de préférence, supérieure à 100 fois, la masse de ce microéchantillon, et qui rend ce système apte, grâce à ladite pompe doseuse et auxdits moyens de transfert remplissant la ou chaque microéprouvette dans la centrifugeuse à l'arrêt avant centrifugation, à réaliser à un instant donné l'extraction par centrifugation d'un seul. microéchantillon contenu dans une seule micro-éprouvette ou de plusieurs microéchantillons contenus dans seulement certaines de ces micro-éprouvettes, au fur et à mesure du remplissage de ces dernières.

2. Système automatisé (10) d'extraction en continu selon la revendication 1, **caractérisé en ce que** lesdits tronçons (12a et 12b) de chaque micro-éprouvette (12) présentent des volumes sensiblement identiques qui sont chacun prévus pour contenir pratiquement un microéchantillon (11), lequel a par exemple un volume compris entre 1 µL et 100 µL, par exemple environ égal à 8 µL dans le cas d'un microéchantillon de sang de souris ou à 30 µL dans le cas d'un microéchantillon de sang de rat.

3. Système automatisé (10) d'extraction en continu selon une des revendications précédentes, **caractérisé en ce que** chaque micro-éprouvette (12) contient en outre, avant son remplissage par le microéchantillon (11) correspondant, au moins un agent d'extraction (15) qui est apte à extraire ladite phase (11a) du microéchantillon et dont la densité est choisie intermédiaire entre celle de ladite phase et celle du reste (11b) du microéchantillon de telle sorte que, lors de la centrifugation, cet agent migre jusqu'à l'interface entre ladite phase et le reste du microéchantillon en y formant une barrière physique, et **en ce que** de préférence ledit agent d'extraction (15) comprend un gel polymérique « MAGIC » de type à acides méthacrylique et ascorbique dans de la gélatine et initié par du cuivre.

4. Système automatisé (10) d'extraction en continu selon la revendication 3, **caractérisé en ce que** ladite micro-pipette est en outre agencée pour transférer une quantité déterminée dudit agent d'extraction (15) dans chaque micro-éprouvette (12) en étant montée mobile sur ledit bras articulé.

5. Méthode automatisée d'extraction physique en continu d'au moins une phase liquide (11a) d'une série de microéchantillons liquides (11) présentant chacun un volume inférieur à 100 µL, tels que des microéchantillons de sang total de mammifère, préalablement prélevés et stockés en étant discrétisés dans l'espace et dans le temps, cette méthode étant mise en oeuvre par un système (10) selon une des revendications précédentes, **caractérisée en ce que** cette méthode comprend l'utilisation d'au moins une micro-éprouvette (12) remplie d'un microéchantillon (11) et présentant une masse qui est supérieure à 10 fois et de préférence à 100 fois la masse de ce microéchantillon et la commande, par ledit dispositif de commande (9), de la centrifugeuse (13), de ladite pompe doseuse péristaltique (7), de ladite micropipette mobile actionnée par ledit bras articulé et desdits moyens d'éjection et de mise en place des micro-éprouvettes, de telle sorte que cette masse permette grâce à ladite pompe doseuse et à ladite micropipette remplissant la ou chaque microéprouvette dans la centrifugeuse à l'arrêt avant centrifugation, de réaliser à un instant donné l'extraction par centrifugation d'une partie seulement des micro-éprouvettes, au fur et à mesure du remplissage de ces dernières.

6. Méthode automatisée d'extraction physique en continu selon la revendication 5, **caractérisée en ce qu'**elle comprend, préalablement au remplissage de chaque micro-éprouvette (12), l'incorporation à cette dernière d'un agent d'extraction (15) qui est apte à extraire ladite phase (11a) du microéchantillon (11) et dont la densité est choisie intermédiaire entre cette de ladite phase et celle du reste (11b) du microéchantillon de telle sorte que, lors de la centrifugation, cet agent soit initialement localisé dans ledit tronçon supérieur puis, par centrifugation, dans ledit tronçon inférieur de chaque micro-éprouvette pour migrer jusqu'à l'interface entre ladite phase et le reste du microéchantillon en y formant une barrière physique, ledit agent d'extraction étant de préférence un gel polymérique « MAGIC » de type à acides méthacrylique et ascorbique dans de la gélatine et initié par du cuivre, et **en ce que** de préférence l'incorporation dudit agent d'extraction (15) à chaque micro-éprouvette (12) à remplir est réalisée par le déplacement de ladite micro-pipette actionnée par ledit bras articulé et venant introduire dans chaque micro-éprouvette une quantité constante déterminée de cet agent, puis par la rotation de ladite centrifugeuse (13) jusqu'à ce que ledit agent parvienne au fond de cette micro-éprouvette.

7. Méthode automatisée d'extraction physique en continu selon la revendication 5 ou 6, **caractérisée en ce qu'**antérieurement à cette extraction :
a) on prélève en continu par un système automatisé de prélèvement (3) les microéchantillons (11) selon une fonction temporelle monotone via l'envoi à des instants tᵢ préprogrammés, par ledit dispositif de commande (9) à ce système de prélèvement, de signaux de prélèvement d'un microéchantillon de volume préprogrammé, puis
b) ces microéchantillons ainsi prélevés se succèdent spatialement et temporellement dans un conduit de stockage temporaire jusqu'à une extrémité aval de ce conduit où chaque microéchantillon tombe dans un réceptacle (8) où il est ensuite transféré en continu, via ladite pompe doseuse (7), dans les micro-éprouvettes (12) de ladite centrifugeuse (13), le synchronisme entre ce transfert et la progression des microéchantillons dans ce conduit de stockage étant assuré par ce dispositif de commande assisté par ordinateur.

8. Installation automatisée (1) pour procéder successivement et en continu au prélèvement, au stockage, à l'extraction d'au moins une phase (11a) de microéchantillons liquides (11) discrétisés dans l'espace et dans le temps, cette installation étant utilisable pour mesurer des fonctions d'entrée de mammifères (2) pour l'imagerie nucléaire, en particulier pour l'imagerie quantitative de traceurs en tomographie par émission de positons (TEP), chaque microéchantillon liquide (11) étant alors de préférence du sang de ce mammifère, tel qu'un rat ou une souris, **caractérisée en ce que** l'installation comporte :
- un système automatisé de prélèvement en continu (3) de microéchantillons et de stockage temporaire de ces derniers pour l'aspiration par à-coups de ces microéchantillons, et
- un système d'extraction (10) selon une des revendications 1 à 4, qui est agencé en aval de ce système de prélèvement par l'intermédiaire de ladite pompe doseuse péristaltique (7), dans lequel lesdites micro-éprouvettes (12) présentent chacune un diamètre dans leur tronçon supérieur (12a) qui est égal ou supérieur au diamètre de leur tronçon inférieur (12b) et qui est par exemple égal au double de ce dernier diamètre, ledit dispositif de commande (9) assisté par ordinateur commandant ledit système de prélèvement et ledit système d'extraction,
**en ce que** ledit système de prélèvement prélève les microéchantillons via ladite pompe doseuse péristaltique (7) dudit système d'extraction,
et **en ce que** de préférence chaque micro-éprouvette (12) présente une hauteur égale ou supérieure à 30 mm et est pourvue, dans son tronçon supérieur (12a), d'un appareil de mesure (30) d'une grondeur physique relative à un rayonnement pour lequel la paroi de chaque micro-éprouvette (12) est transparente et qui est disposé selon le même axe que cette micro-éprouvette, tel qu'un compteur puits de rayonnement gamma ou un compteur par fluorescence.

9. Installation automatisée selon la revendication 8, **caractérisée en ce que** ledit appareil de mesure (30) constitué d'un compteur et un robot-poussoir (31) piloté par ordinateur sont respectivement agencés au-dessus et au-dessous d'un emplacement de ladite centrifugeuse (13) qui est destiné à recevoir chaque micro-éprouvette (12) à soumettre à cette mesure, ce robot-poussoir étant apte à pousser momentanément chaque micro-éprouvette de manière à amener la partie supérieure de cette dernière à l'intérieur d'un blindage dudit compteur, et **en ce que** chaque microéchantillon liquide (11) issu dudit système d'extraction (10) et soumis à cette mesure est constitué de sang total dans lequel le plasma (11a) a été extrait des globules (11b), cet appareil de mesure étant un compteur gamma absolu (30) de type compteur-puits qui est destiné à mesurer l'activité du plasma seul ou bien des globules seuls de chaque microéchantillon à travers la micro-éprouvette (12) correspondante, pour permettre la mesure de l'activité du plasma seul (11a), les globules (11b) du sang déposés par centrifugation au fond de chaque micro-éprouvette restant en dehors de ce blindage.

10. Installation automatisée (1) selon la revendication 8 ou 9, **caractérisée en ce que** ledit système automatisé de prélèvement (3) présente une succession de conduits (4, 5) pour le passage des microéchantillons (11) dont les élargissements de section transversale sont tous inférieurs ou égaux à 20 % en termes de ratios de surfaces, de telle sorte que les microéchantillons discrétisés dans l'espace et dans le temps qui se suivent dans cette succession de conduits, en particulier ceux dont le volume est inférieur ou égal à 30 µL, ne s'y mélangent pratiquement pas entre eux.

11. Installation automatisée (1) selon la revendication 10, **caractérisée en ce que** ledit système automatisé de prélèvement (3) comporte un dispositif de raccordement fluidique (20) qui est destiné à transférer un liquide à prélever, tel que des microéchantillons sanguins, et qui est destiné à être raccordé à un premier conduit (21) par une première ouverture de ce dispositif, lequel comporte une seconde ouverture traversée par un second conduit (28) destiné à communiquer avec le premier conduit pour transférer ce liquide, le dispositif comportant :
- un raccord fluidique femelle (22) qui définit ladite première ouverture et qui comprend une surface interne d'emmanchement (23) se terminant par une extrémité radiale femelle (24) où débouche ce premier conduit, et
- un raccord fluidique mâle (25) qui définit ladite seconde ouverture en étant emmanché dans le raccord femelle via sa surface externe (26) et qui se termine par une extrémité radiale mâle (27) à l'intérieur du raccord femelle,
ce second conduit étant formé d'un micro-tube souple qui est enfoncé dans le raccord mâle axialement au-delà de ladite extrémité mâle (27), l'extrémité libre de ce second conduit appuyant de manière étanche contre ladite extrémité femelle (24) de sorte à minimiser le volume mort entre le premier conduit et le raccord mâle, et **en ce que** de préférence ladite surface interne d'emmanchement (23) du raccord femelle est une surface conique convergeant vers ladite extrémité femelle (24) avec une même conicité que ladite surface externe (26) du raccord mâle qui converge vers ladite extrémité mâle (27).

12. Installation automatisée (1) selon la revendication 11, **caractérisée en ce que** lesdits raccords mâle (25) et femelle (22) sont tous deux des raccords de type « Luer », tels que définis par la norme ISO 59461 de 1986, ou bien de type « Luer Lock », tels que définis par la norme ISO 594-2 de 1998, et **en ce que** de préférence ledit second conduit (28) dépasse de ladite extrémité mâle (27) d'une longueur axiale qui est au moins égale à la distance minimale (dl) séparant lesdites extrémités respectives (24 et 27) des deux raccords (22 et 25) lorsque le raccord mâle est enfoncé en position de connexion dans le raccord femelle (22) conformément à l'une ou à l'autre desdites normes.

13. Installation automatisée (1) selon une des revendications 8 à 12, **caractérisée en ce qu'**elle comporte en outre un dispositif de comptage (6) avec une sensibilité améliorée de particules élémentaires émises par les microéchantillons, ce dispositif de comptage comportant un conduit de transfert de ces microéchantillons et, agencés à l'extérieur dudit conduit, des moyens de détection (6a) de ces particules, lesquelles sont atténuées par une paroi dudit conduit et/ou par ces microéchantillons, ce dispositif de comptage comprenant au moins un tronçon de comptage (4a) de section transversale oblongue qui relie entre elles deux portions adjacentes de ce conduit présentant une plus grande section de passage et qui présente un ratio [hauteur interne (h) / largeur interne (I)] inférieur ou égal à 20 %, où la hauteur et la largeur internes représentent respectivement la plus petite et la plus grande dimensions transversales de ce tronçon mesurées selon deux directions sensiblement perpendiculaires, lesdits moyens de détection s'étendant transversalement à ce tronçon en regard de toute sa largeur interne et de part et d'autre de celle-ci, et **en ce que** de préférence ce tronçon de comptage (4a) présente un ratio [hauteur interne (h) / largeur interne (I)] compris entre 5 % et 10 %.

14. Installation automatisée (1) selon la revendication 13, **caractérisée en ce que** le ratio de la section de passage du tronçon (4a) sur celle de chaque portion adjacente est inférieur ou égal à 35 %, et **en ce que** de préférence :
- ladite hauteur interne (h) du tronçon de comptage (4a) est inférieure à 20 % du diamètre interne de chacune des portions cylindriques adjacentes, et
- ladite largeur interne (l) de ce tronçon (4a) est supérieure à 1,3 fois ce diamètre interne.

## Patentansprüche

1. Automatisiertes System (10) zur kontinuierlichen physikalischen Extraktion wenigstens einer flüssigen Phase (11a) aus einer Reihe von flüssigen Mikroproben, die jeweils ein Volumen von weniger als 100 µl aufweisen (11), umfassend eine Zentrifuge (13), die mit einer Vielzahl von Mikro-Probenröhrchen (12) ausgestattet ist, von denen wenigstens eines mit der entsprechenden Mikroprobe gefüllt wird, und einen oberen Füllungsabschnitt (12a) umfasst, der sich durch einen unteren Trennungsabschnitt (12b) mit einem kleineren Querschnitt als der des oberen Abschnitts fortsetzt, wobei dieses System mit einer computergestützten Steuerungsvorrichtung (9) ausgestatte ist und fähig ist, die folgenden Element, die alle in diesem System enthalten sind, zu steuern:
- die Zentrifuge (13),
- Übertragungsmittel, die dazu bestimmt sind, über eine peristaltische Dosierpumpe (7), eingefügt stromaufwärts von dieser Zentrifuge und auch in diesem System enthalten, ein bestimmtes Volumen von jeder Mikroprobe aus einem Lagerbehälter (8) zu wenigstens einem der Mikro-Probenröhrchen, die zum Befüllen bereit sind, zu übertragen, wobei diese Übertragungsmittel eine Mikropipette umfassen, die beweglich an einem Gelenkarm montiert ist, welcher diese Mikropipette unter Steuerung der Steuerungsvorrichtung in Bewegung setzt, um jedes Mikro-Probenröhrchen in der Zentrifuge zu befüllen, und
- Mittel zum Auswerfen und zur Platzierung der Mikro-Probenröhrchen,
wobei das oder jedes Mikro-Probenröhrchen, das so gefüllt wurde, eine Masse aufweist, die über dem 10-fachen, vorzugsweise dem 100-fachen der Masse dieser Mikroprobe liegt, und das dieses System dank der Dosierpumpe und der Übertragungsmittel, die das oder jedes Mikro-Probenröhrchen in der Zentrifuge im Stillstand vor Zentrifugation befüllen, fähig macht, zu einem gegebenen Zeitpunkt die Extraktion durch Zentrifugation von einer einzelnen Mikroprobe, die in einem einzelnen Mikroproben-Röhrchen enthalten ist, oder von mehreren Mikroproben, die in einigen dieser Mikro-Probenröhrchen enthalten sind, durchzuführen, und zwar entsprechend der Füllung dieser letztgenannten.

2. Automatisiertes System (10) zur kontinuierlichen Extraktion gemäß Anspruch 1, **dadurch gekennzeichnet, dass** die Abschnitte (12a und 12b) jedes Mikro-Probenröhrchen (12) im Wesentlichen gleiche Volumina aufweisen, die jeweils vorgesehen sind, um praktisch eine Mikroprobe (11) aufzunehmen, wobei diese zum Beispiel ein Volumen hat, das zwischen 1 µl und 100 µl liegt, zum Beispiel etwa 8 µl im Fall einer Mikroprobe von Mausblut oder 30 µl im Fall einer Mikroprobe von Rattenblut ist.

3. Automatisiertes System (10) zur kontinuierlichen Extraktion gemäß einem der vorangehenden Ansprüche, **dadurch gekennzeichnet**, das jedes Mirko-Probenröhrchen (12) außerdem vor seiner Befüllung mit der entsprechenden Mikroprobe (11) wenigstens ein Extraktionsmittel (15) enthält, das in der Lage ist, die genannte Phase (11a) der Mikroprobe zu extrahieren, und dessen Dichte zwischen der der genannten Phase und der des Rests (11b) der Mikroprobe derart gewählt ist, dass dieses Mittel während der Zentrifugation bis zur Grenzfläche zwischen der genannten Phase und dem Rest der Mikroprobe wandert, wobei es dort eine physikalische Barriere bildet, und dadurch, dass das Extraktionsmittel (15) vorzugsweise ein polymeres Gel "MAGIC" des Typs aus Methacryl- und Ascorbinsäure in Gelatine und initiiert durch Kupfer umfasst.

4. Automatisiertes System (10) zur kontinuierlichen Extraktion gemäß Anspruch 3, **dadurch gekennzeichnet, dass** die Mikropipette außerdem angeordnet ist, um eine bestimmte Menge des Extraktionsmittels (15) in jedes Mikro-Probenröhrchen 812), das beweglich an dem Gelenkarm montiert ist, zu übertragen.

5. Automatisiertes Verfahren zur kontinuierlichen physikalischen Extraktion einer flüssigen Phase (11a) aus einer Reihe von flüssigen Mikroproben (11), die jeweils ein Volumen von weniger als 100 µl aufweisen, wie zum Beispiel Mikroproben von Säugetiervollblut, die vorher entnommen und gelagert wurden, wobei sie im Raum und in der Zeit diskretisiert sind, wobei dieses Verfahren durch ein System (10) gemäß einem der vorangehenden Ansprüche durchgeführt wird, **dadurch gekennzeichnet, dass** dieses Verfahren die Verwendung wenigstens eines Mikro-Probenröhrchens (12), das mit einer Mikroprobe (11) gefüllt wird und eine Masse aufweist, die über dem 10-fachen und vorzugsweise dem 100-flachen der Masse dieser Mikroprobe liegt, und der Steuerung durch die Steuerungsvorrichtung (9), der Zentrifuge (13), der peristaltischen Dosierpumpe (7), der beweglichen Mikropipette, die von dem Gelenkarm in Bewegung gesetzt wird, und der Mittel zum Auswerfen und zur Platzierung der Mikro-Probenröhrchen umfasst, und zwar derart, dass diese Masse es dank der Dosierpumpe und der Mikropipette, die das oder jedes Mikro-Probenröhrchen in der Zentrifuge im Stillstand vor Zentrifugation befüllen, erlaubt, zu einem gegebenen Zeitpunkt die Extraktion durch Zentrifugation nur eines Teils der Mikro-Probenröhrchen entsprechend der Füllung dieser letztgenannten durchzuführen.

6. Automatisiertes Verfahren zur kontinuierlichen physikalischen Extraktion gemäß Anspruch 5, **dadurch gekennzeichnet, dass** es vor Befüllung jedes Mikro-Probenröhrchens (12) die Einarbeitung eines Extraktionsmittels (15) in dieses letztgenannte umfasst, das angepasst ist, um die genannte Phase (11a) der Mikroprobe (11) zu extrahieren und dessen Dichte zwischen der der genannten Phase und der des Restes (11b) der Mikroprobe derart gewählt ist, dass dieses Mittel sich während der Zentrifugation zu Beginn in dem oberen Abschnitt befindet, sich dann durch Zentrifugation in dem unteren Abschnitt jedes Mikro-Probenröhrchens befindet, um bis zur Grenzfläche zwischen der genannten Phase und dem Rest der Mikroprobe zu wandern, wobei es hier eine physikalische Barriere bildet, wobei das Extraktionsmittel vorzugsweise ein polymeres Gel "MAGIC" des Typs mit Methacryl- und Ascorbinsäure in Gelatine und initiiert durch Kupfer ist, und dadurch, dass vorzugsweise die Einarbeitung des Extraktionsmittels (15) in jedes zu befüllende Mikro-Probenröhrchen (12) durch die Verschiebung der Mikropipette, die durch den Gelenkarm bewegt wird und die in jedes Mikro-Probenröhrchen eine bestimmte konstante Menge dieses Mittels einführen wird, danach durch Rotation der Zentrifuge (13), bis das Mittel zum Boden dieses Mikro-Probenröhrchens gelangt, durchgeführt wird.

7. Automatisiertes Verfahren zur kontinuierlich physikalischen Extraktion gemäß Anspruch 5 oder 6, **dadurch gekennzeichnet, dass** vor dieser Extraktion:
a) man entnimmt kontinuierlich durch ein automatisiertes Entnahmesystem (3) Mikroproben (11) entsprechend einer monotonen Zeitfunktion durch die Aussendung von Signalen zur Entnahme einer Mikroprobe mit vorprogrammierten Volumen zu vorprogrammierten Zeitpunkten tᵢ durch die Steuerungsvorrichtung (9) an dieses Entnahmesystem, danach
b) folgen diese so entnommenen Proben einander räumlich und zeitlich in eine Leitung zur temporären Lagerung bis zu einem stromabwärts gelegenen Ende dieser Leitung, wo jede Mikroprobe in ein Auffanggefäß (8) fällt, von wo sie dann kontinuierlich durch die Dosierpumpe (7) in die Mikro-Probenröhrchen (12) der Zentrifuge (13) übertragen wird, wobei der Synchronismus zwischen dieser Übertragung und des Fortschreitens der Mikroproben in dieser Leitung zur Lagerung durch diese computergestützte Steuerungsvorrichtung sichergestellt wird.

8. Automatisierte Anlage (1), um sukzessive und kontinuierlich zur Entnahme, zur Lagerung, zur Extraktion wenigstens einer Phase (11a) von flüssigen Mikroproben (11), die räumlich und zeitlich diskretisiert sind, fortzuschreiten, wobei diese Anlage verwendbar ist, um Eingangsfunktionen von Säugetieren (2) zur nuklearmedizinischen Bildgebung, insbesondere zur quantitativen Bildgebung von Tracern in der Positronen-Emissionstomographie (PET) zu messen, wobei jede flüssige Mikroprobe (11) vorzugsweise Blut dieses Säugetiers, zum Beispiel einer Ratte oder einer Maus, ist, **dadurch gekennzeichnet, dass** die Anlage umfasst:
- ein automatisiertes System zur kontinuierlichen Entnahme (3) von Mikroproben und zur temporären Lagerung dieser letztgenannten zur stoßweisen Ansaugung dieser Mikroproben und
- ein Extraktionssystem (10) gemäß einem der Ansprüche 1 bis 4, das stromabwärts dieses System zur Entnahme mithilfe der peristaltischen Dosierpumpe (7) angeordnet ist, wobei die Mikro-Probenröhrchen (12) jeweils einen Durchmesser in ihrem oberen Abschnitt (12a) aufweisen, der gleich dem oder größer als der Durchmesser ihres unteren Abschnitts (12b) ist, und der zum Beispiel gleich oder das doppelte dieses letzten Durchmessers ist, wobei die genannte computergestützte Steuerungsvorrichtung (9) das Entnahmesystem und das Extraktionssystem steuert,
dadurch, dass das Entnahmesystem die Mikroproben durch die peristaltische Dosierpumpe (7) des Extraktionssystems entnimmt,
und dadurch, dass vorzugsweise jedes Mikro-Probenröhrchen (12) eine Höhe von gleich oder über 30 mm aufweist und in seinem oberen Abschnitt (12a) ausgestattet ist mit einer Messapparatur (30) einer physikalischen Größe relativ zu einer Strahlung, für die die Wand jedes Mikro-Probenröhrchens (12) transparent ist, und die entlang derselben Achse wie dieses Mikro-Probenröhrchen angeordnet ist, wie zum Beispiel ein Zählgerät mit Gamma-Strahlung (compteur puits de rayonnement gamma) oder ein Fluoreszenz-Zählgerät.

9. Automatisierte Anlage gemäß Anspruch 8, **dadurch gekennzeichnet, dass** das Messgerät (30), das aus einem Zählgerät besteht, und eine computergesteuerte Roboter-Druckvorrichtung (31), die jeweils oberhalb und unterhalb einer Stelle der Zentrifuge (13), die dazu bestimmt ist, jedes Mikro-Probenröhrchen (12) aufzunehmen, um es dieser Messung zu unterziehen, angeordnet sind, wobei diese Roboter-Druckvorrichtung fähig ist, jedes Mikro-Probenröhrchen augenblicklich zu drücken, um den oberen Teil dieses letztgenannten in das Innere einer Abschirmung dieses Zählgeräts zu führen und dadurch, dass jede flüssige Mikroprobe (11), die aus dem Extraktionssystem (10) kommt und dieser Messung unterworfen wird, aus Vollblut besteht, bei dem aus dem Plasma (11a) die Blutkörperchen (11b) extrahiert wurden, wobei dieses Messgerät ein absoluter Gamma-Zähler (30) des Typs "Compteur-Puits" ist, der dazu bestimmt ist, die Aktivität des Plasmas allein oder der Blutkörperchen allein für jede Mikroprobe durch das entsprechende Mikro-Probenröhrchen (12) zu messen, um die Messung der Aktivität des Plasmas allein (11a), der Blutkörperchen (11b) des durch Zentrifugation arm Boden jedes Mikro-Probenröhrchens abgeschiedenen Blutes, das außerhalb dieser Abschirmung bleibt, zu erlauben.

10. Automatisierte Anlage (1) gemäß Anspruch 8 oder 9, **dadurch gekennzeichnet, dass** das automatisierte System zur Entnahme (3) einer Reihe von Leitungen (4, 5) für die Passage der Mikroproben (11) aufweist, deren Querschnittserweiterungen alle gleich 20% oder darunter bezüglich der Oberflächenverhältnisse sind, derart, dass die räumlich und zeitlich diskretisierten Mikroproben, die in dieser Reihe von Leitungen aufeinanderfolgen, insbesondere die, deren Volumen 30 µl oder weniger ist, sich dort praktisch nicht miteinander vermischen.

11. Automatisierte Anlage (1) gemäß Anspruch 10, **dadurch gekennzeichnet, dass** das automatisierte System zur Entnahme (3) eine Fluidverbindungsvorrichtung (20) umfasst, die dazu bestimmt ist, eine zu entnehmende Flüssigkeit wie Blutmikroproben, zu übertragen, und die dazu bestimmt ist, durch eine erste Öffnung dieser Vorrichtung mit einer ersten Leitung (21) verbunden zu werden, wobei diese eine zweite Öffnung umfasst, die von einer zweiten Leitung (28) durchquert wird, die dazu bestimmt ist, mit der ersten Leitung zu kommunizieren, um diese Flüssigkeit zu übertragen, wobei die Vorrichtung umfasst:
- eine weibliche Fluidverbindung (22), die die genannte erste Öffnung definiert und die eine interne Einsteckende-Oberfläche (23) umfasst, die mit einem radialen weiblichen Ende (24) endet, wo diese erste Leitung einmündet, und
- eine männliche Fluidverbindung (25), die die zweite Öffnung definiert, indem sie durch ihre äußere Oberfläche (26) in der weiblichen Verbindung eingesteckt ist, und die mit einem männlichen radialen Ende (27) im Inneren der weiblichen Verbindung endet,
wobei diese zweite Leitung von einem flexiblen Mikroschlauch gebildet wird, der über das männliche Ende (27) hinaus axial in die männliche Verbindung eingesteckt ist, wobei das freie Ende dieser zweiten Leitung in dichter Art gegen das weibliche Ende (24) drückt, sodass das Totvolumen zwischen der ersten Leitung und der männlichen Verbindung minimiert wird, und dadurch, dass die interne Einsteckoberfläche (23) der weiblichen Verbindung vorzugsweise eine konische Oberfläche ist, die sich in Richtung des weiblichen Endes (24) verjüngt, und zwar mit derselben Konizität, mit der sich die äußere Oberfläche (26) der männlichen Verbindung in Richtung des männlichen Endes (27) verjüngt.

12. Automatisierte Anlage (1) gemäß Anspruch 11, **dadurch gekennzeichnet, dass** die männlichen (25) und weiblichen (22) Verbindungen alle beide Verbindung des "Luer"-Typs, wie definiert durch die Norm ISO 59461 von 1986, oder auch des "Luer Lock"-Typs, wie definiert durch die Norm ISO 594-2 von 1998, sind, und dadurch, dass die zweite Leitung (28) vorzugsweise an dem männlichen Ende (27) in einer axialen Länge vorbeiführt, die wenigstens gleich dem minimalen Abstand (dl) ist, der die jeweiligen Enden (24 und 27) der zwei Verbindungen (22 und 25) trennt, wenn die männliche Verbindung in Verbindungsposition in die weibliche Verbindung (22) entsprechend der einen oder der anderen der genannten Normen eingesteckt ist.

13. Automatisierte Anlage (1) gemäß einem der Ansprüche 8 bis 12, **dadurch gekennzeichnet, dass** sie außerdem eine Zählvorrichtung (6) mit verbesserter Empfindlichkeit für Elementarteilchen, die durch die Mikroproben emittiert werden, umfasst, wobei diese Zählvorrichtung eine Übertragungsleitung für diese Mikroproben, sowie angeordnet an der Außenseite der Leitung, Detektionsmittel (6a) für diese Teilchen umfasst, die durch eine Wand der Leitung und/oder durch diese Mikroproben abgeschwächt werden, wobei diese Zählvorrichtung wenigstens einen Zählabschnitt (4a) mit länglichem Querschnitt umfasst, der sich zwischen den zwei benachbarten Teilen dieser Leitung befindet, der einen größeren Durchgangsquerschnitt aufweist und der ein Verhältnis [innere Höhe (h)/innere Breite (1)] von 20% oder weniger aufweist, wo die innere Höhe und die innere Breite die kleinste bzw. die größte Querabmessung dieses Abschnitts, gemessen in zwei etwa zueinander senkrechten Richtungen, darstellen, wobei die Detektionsmittel sich transversal zu diesem Abschnitt erstrecken, und zwar bezüglich seiner gesamten inneren Länge und auf beiden Seiten davon erstrecken, und dadurch, dass dieser Zählabschnitt (4a) vorzugsweise ein Verhältnis [innere Höhe (h)/innere Breite (1)] von zwischen 5% und 10% aufweist.

14. Automatisierte Anlage (1) gemäß Anspruch 13, **dadurch gekennzeichnet, dass** das Verhältnis des Durchgangsquerschnitts des Abschnitts (4a) zu dem jedes angrenzenden Teils 35% oder darunter ist, und dass vorzugsweise:
- die innere Höhe (h) des Zählabschnitts (4a) kleiner als 20% des inneren Durchmessers jedes der angrenzenden zylindrischen Teile ist, und
- die innere Breite (1) dieses Abschnitts (4a) mehr als das 1,3-fache dieses inneren Durchmessers ist.

## Claims

1. A continuous automated extraction system (10) for physically extracting at least one liquid phase (11a) of a series of liquid microsamples each comprising a volume lower than 100 µL (11), comprising a centrifuge (13) provided with a plurality of microholders (12), at least one of which is filled with the corresponding microsample and comprises a filling upper portion (12a) that is extended by a separating lower portion (12b) of smaller cross section than that of the upper portion, this system is provided with a computer-aided control device (9) able to control the following elements, all included in this system:
- the centrifuge (13),
- transfer means designed to transfer, via a peristaltic metering pump (7) placed upstream of this centrifuge and also included in this system, a specified volume of each microsample from a storage container (8) to at least one of the microholders waiting to be filled, these transfer means comprising a micropipette which is movably mounted on an articulated arm actuating this micropipette under the control of the control device to fill each microholder in the centrifuge, and
- means for ejecting and positioning the microholders,
said or each microholder thus filled having a mass which is more than 10 times, and preferably more than 100 times the mass of this microsample, and which makes this system,
thanks to said metering pump and to said transfer means filling the or each microholder in the stopped centrifuge before centrifugation, able to carry out at a given instant the extraction by centrifugation of only one microsample contained in a single microholder or of several microsamples contained only in some of these microholders, progressively as the latter are filled.

2. The continuous automated extraction system (10) as claimed in claim 1, **characterised in that** said portions (12a and 12b) of each microholder (12) have substantially identical volumes, each volume being configured to substantially contain one microsample (11), which has for example a volume of between 1 µL and 100 µL, for example about 8 µL in the case of a mouse blood microsample or about 30 µL in the case of a rat blood microsample.

3. The continuous automated extraction system (10) according to any of the preceding claims, **characterised in that** each microholder (12) further contains, before it is filled with the corresponding microsample (11), at least one extraction agent (15) which is capable of extracting said phase (11a) from the microsample and the density of which is chosen to be intermediate between that of said phase and that of the remainder (11b) of the microsample in such a way that, during centrifugation, this agent migrates to the interface between said phase and the remainder of the microsample, forming a physical barrier thereat, and preferably **in that** said extraction agent comprises a "MAGIC" polymer gel of the type with methacrylic and ascorbic acids in gelatine and initiated by copper.

4. The continuous automated extraction system (10) as claimed in claim 3, **characterised in that** said micropipette is further configured to transfer a specified amount of said extraction agent (15) into each microholder while being movably mounted on said articulated arm.

5. A continuous automated extraction method for physically extracting at least one liquid phase (11a) of a series of liquid microsamples (11) each having a volume lower than 100 µl, such as whole blood microsamples from a mammal, which are taken beforehand and stored in discrete packets, both in space and in time, this method being implemented by a system (10) as claimed in one of the preceding claims, **characterized in that** this method comprises the use of at least one microholder (12) filled with a microsample (11) and having a mass that is more than 10 times and preferably more than 100 times the mass of this microsample, and the control, by said computer-aided control device (9), of the centrifuge (13), of said peristaltic metering pump (7), of said movably mounted micropipette actuated by said articulated arm and of said means for inserting and ejecting the microholders, in such a way that this mass allows thanks to said metering pump and to said micropipette filling the or each microholder in the stopped centrifuge before centrifugation, at a given instant, to carry out the extraction by centrifuging only a part of the microholders, progressively as the latter are filled.

6. The continuous automated physical extraction method as claimed in claim 5, **characterized in that** it comprises, before each microholder (12) is filled, the incorporation into the latter of an extraction agent (15) which is capable of extracting said phase (11a) from the microsample (11) and the density of which is chosen to be intermediate between that of said phase and that of the remainder (11b) of the microsample in such a way that, during the centrifugation, this agent is initially located in said upper portion and then, by centrifugation, in said lower portion of each microholder in order to migrate to the interface between said phase and the remainder of the microsample, forming a physical barrier thereat, said extraction agent preferably being a "MAGIC" of the type with methacrylic and ascorbic acids in gelatin initiated by copper polymer gel, and preferably **in that** the incorporation of said extraction agent (15) in each microholder (12) to be filled is carried out by displacement of said micropipette actuated by said articulated arm and introducing, into each microholder, a specified constant amount of this agent, and then by the rotation of said centrifuge (13) until said agent falls to the bottom of this microholder.

7. The continuous automated physical extraction method as claimed in claim 5 or 6, **characterized in that**, prior to this extraction:
a) the microsamples (11) are contiguously taken, by an automated sampling system (3), according to a monotonic time function, via the sending at preprogrammed instants tᵢ, by said control device (9), to this sampling system, of signals for the taking of a microsample of preprogrammed volume; and then
b) these microsamples thus taken follow one another spatially and temporally in a temporary storage line as far as a downstream end of this line where each microsample drops into a receptacle (8) from where it is then continuously transferred, via said metering pump (7), into the microholders (12) of said centrifuge (13), the synchronism between this transfer and the progression of the microsamples in this storage line being controlled by this computer-assisted control device.

8. An automated installation (1) for carrying out, in succession and continuously, the taking, the storage and the extraction, as discrete packets in space and in time, of at least one phase (11a) of liquid microsamples (11), this installation being usable to measure entry functions of mammals (2) for nuclear imaging, in particular for quantitative imaging of tracers using TEP (positron emission tomography), each liquid microsample (11) then being preferably blood from this mammal, such as a rat or a mouse, **characterized in that** the installation comprises:
- a continuous automated sampling system (3) for taking microsamples for sucking up these microsamples in bursts, and for temporarily storing said microsamples;
- an extraction system (10) as claimed in claims 1 to 4, which is placed downstream of this sampling system by means of said peristaltic metering pump (7), in which said microholders (12) each have a diameter in their upper portion (12a) that is equal to or larger than the diameter of their lower portion (12b), the former diameter being for example twice the latter diameter, said computer-aided control device (9) controlling said sampling system and said extraction system,
**in that** said sampling system takes the micro samples via said peristaltic pump (7) of said extraction system and **in that** each microholder (12) has a height equal to or greater than 30 mm and is provided, in its upper portion (12a), with a measurement apparatus (30) for measuring a physical quantity relating to radiation to which the wall of each microholder (12) is transparent, which apparatus, such as a gamma-radiation well counter or a fluorescence counter, is placed on the same axis as this microholder.

9. The automated installation as claimed in claim 8, **characterized in that** said measurement apparatus (30) consisting of a counter and a computer-controlled robotic push-rod (31) are placed respectively above and below a location in said centrifuge (13) intended to accommodate each microholder (12) which is to undergo this measurement, the robotic push-rod being capable of momentarily pushing each microholder so as to bring its upper part into a shield for said counter, and **in that** each liquid microsample (11) obtained from said extraction system (10) and subjected to this measurement consists of whole blood in which the plasma (11a) has been extracted from the corpuscles (11), this measurement apparatus being an absolute gamma-counter (30) of the well-counter type, which is intended to measure the activity of just the plasma or just the corpuscles of each microsample through the corresponding microholder (12), in order to allow measurement of the activity of just the plasma (11a), the blood corpuscles (11b) deposited by centrifugation on the bottom of each microholder remaining outside this shield.

10. The automated installation (1) as claimed in claim 8 or 9, **characterized in that** said automated sampling system (3) has a succession of lines (4, 5) through which the microsamples (11) pass, the cross-sectional enlargements of said lines all being less than or equal to 20% in terms of area ratios, in such a way that the microsamples in discrete packets both in space and in time that follow one another in this succession of lines, in particular those having a volume of 30 µl or less, do not substantially become mixed together.

11. The automated installation (1) as claimed in claim 10, **characterized in that** said automated sampling system (3) comprises a fluid connection device (20) which is intended for transferring a liquid, such as blood microsamples, to be taken, which system is intended to be connected to a first line (21) via a first opening in this device, which includes a second opening through which a second line (28) passes, the second line being intended to communicate with the first line in order to transfer this liquid, the device comprising:
- a female fluid connector (22) that defines said first opening and has an internal fitting surface (23) terminating in a female radial end (24) into which this first line opens; and
- a male fluid connector (25) that defines said second opening, which is fitted into the female connector via its external surface (26) and terminates via its male radial end (27) inside the female connector,
this second line being formed from a flexible microtube which is pushed right through the male connector axially beyond said male end (27), the free end of this second line pressing in a sealed manner against said female end (24) so as to minimize the dead volume between the first line and the male connector, and preferably **in that** said internal fitting surface (23) of the female connector is a conical surface converting on said female end (24) with the same conicity as said external surface (26) of the male connector, which converges on said male end (27).

12. The automated installation (1) as claimed in claim 11, **characterized in that** said male (25) and female (22) connectors are both connectors of the "Luer" type, as defined by the ISO 59461 standard of 1986, or else of the "Luer-lock" type, as defined by the ISO 594-2 standard of 1998, and preferably **in that** said second line (28) extends beyond said male end (27) by an axial length at least equal to the minimum distance (dl) separating said respective ends (24 and 27) of the two connectors (22 and 25) when the male connector is pushed right into the connection position in the female connector (22) in accordance with one or other of said standards.

13. The automated installation (1) as claimed in one of claims 8 to 12, **characterized in that** it further includes a counting device (6) for counting, with improved sensitivity, elementary particles emitted by the microsamples, this counting device including a line for transferring these microsamples and, placed to the outside of said line, means (6a) for detecting these particles, said particles being attenuated by a wall of said line and/or by these microsamples, this counting device comprising at least a counting portion (4a) of oblong cross section that joins together two adjacent portions of this line, having a larger flow section and which has an [internal height (h)/internal width (1)] ratio of 20% or less, in which the internal height and internal width represent the smallest and largest transverse dimensions, respectively, of this portion, this being measured along two approximately perpendicular directions, said detection means extending transversely to this portion facing its entire width and on either side thereof, and preferably **in that** this counting portion (4a) has an [internal height (h)/internal width (1)] ratio of between 5% and 10%.

14. The automated installation (1) as claimed in claim 13, **characterized in that** the ratio of the flow section of the portion (4a) to that of each adjacent portion is equal to 35% or less, and preferably **in that**
- said internal height (h) of the counting portion (4a) is less than 20% of the inside diameter of each of the adjacent cylindrical portions, and
- said internal width (1) of this portion (4a) is 1.3 times greater than this inside diameter.
